# EUROPEAN PATENT SPECIFICATION

(11) **EP 4 762 377 B1**
(45) Date of publication and mention of the grant of the patent: **02.12.2026**
(21) Application number: 25737078.3
(22) Date of filing: 05.06.2025
(51) Int. Cl.: G01S 7/41, G01S 13/87, G01S 13/89, G01S 13/86, G01S 13/42, G01S 7/295, G06N 3/08, G06N 3/0464, G06N 3/045, G01S 7/48, G01S 17/42, G01S 17/86, G01S 17/89

(54) **SYSTEM AND METHOD SUITABLE FOR PERCEIVING OBJECTS IN A SCENE USING MULTI-VIEW RADAR IMAGES WITH A RADAR DETECTION TRANSFORMER**
SYSTEM UND VERFAHREN ZUM WAHRNEHMUNG VON OBJEKTEN IN EINER SZENE MIT MEHRANSICHTSRADARBILDERN MIT EINEM RADARDETEKTIONSTRANSFORMATOR
SYSTÈME ET PROCÉDÉ DE PERCEPTION D'OBJETS DANS UNE SCÈNE À L'AIDE D'IMAGES RADAR MULTI-VUES AVEC TRANSFORMATEUR DE DÉTECTION RADAR

(30) Priority: 04.10.2024 US 202418906691
(43) Date of publication of application: 24.06.2026
(73) Proprietor: Mitsubishi Electric Corporation, Tokyo 100-8310 (JP)
(72) Inventor: WANG, Pu, Cambridge, Massachusetts 02139-1955 (US); YATAKA, Ryoma, Cambridge, Massachusetts 02139-1955 (US); CARDACE, Adriano, Cambridge, Massachusetts 02139-1955 (US); BOUFOUNOS, Petros, Cambridge, Massachusetts 02139-1955 (US)
(74) Representative: Pfenning, Meinig & Partner mbB
(86) International application number: PCT/JP2025/080085
(87) International publication number: WO 2026/075276

(56) References cited:
- WO-A1-2024/081667
- LEE SHIH-PO ET AL: "HuPR: A Benchmark for Human Pose Estimation Using Millimeter Wave Radar", 2023 IEEE/CVF WINTER CONFERENCE ON APPLICATIONS OF COMPUTER VISION (WACV), 22 October 2022 (2022-10-22), pages 5704 - 5713, XP093316603, ISBN: 978-1-6654-9346-8, DOI: 10.1109/WACV56688.2023.00567

## Description

### [Technical Field]

The present disclosure relates generally to perception of objects in a scene, and more specifically to a system and a method suitable for perceiving an object in a scene using multi-view radar images of the scene.

### [Background Art]

Various perception sensors are used for detecting an object in an indoor environment. Camera and Lidar are the two dominant perception sensors used for the object detection. The camera provides semantically rich visual features of the object, while the Lidar provides high-resolution point clouds that can capture reflection on the object. Compared to the camera and the Lidar, radar is advantageous. The radar transmits electromagnetic waves at a millimeter-wavelength to estimate a range, a velocity, and an angle of the object. At such a wavelength, it can penetrate or diffract around tiny particles in smoke, fog, and dust and offers perception in such adverse conditions. In contrast, laser sent by the Lidar at a much smaller wavelength may bounce off the tiny particles, which leads to a significantly reduced operating range. Compared with the camera, the radar is also resilient to light conditions, e.g., night, sun glare, etc. Besides, the radar offers a cost-effective and reliable option to complement other sensors.

Therefore, indoor radar perception has seen rising interest due to affordable costs and reliability under the adverse conditions (e.g., fire and smoke). However, existing indoor radar perception pipelines fail to account for distinctive characteristics of multi-view radar setting, i.e., the existing radar perception pipelines fail to exploit features of different view images of the same indoor environment for the object detection.

Document LEE SHIH-PO ET AL ("HuPR: A Benchmark for Human Pose Estimation Using Millimeter Wave Radar", 2023 IEEE/CVF WINTER CONFERENCE ON APPLICATIONS OF COMPUTER VISION (WACV), 22 October 2022 (2022-10-22), pages 5704-5713, XP093316603, DOI:10.1109/WACV56688.2023.00567, ISBN: 978-1-6654-9346-8) discloses a human pose estimation benchmark that includes synchronized vision and radio signal components. This dataset is created using cross-calibrated mmWave radar sensors and a monocular RGB camera for cross-modality training of radar-based human pose estimation. Further disclosed is a cross-modality training framework based on ground-truth 2D keypoints representing human body joints for training, which are systematically generated from the pre-trained 2D pose estimation network based on a monocular camera input image. The framework consists of a radar pre-processing method that extracts the velocity information from radar data, Cross- and Self-Attention Module, to fuse multi-scale radar features, and Pose Refinement Graph Convolutional Networks, to refine the predicted keypoint confidence heatmaps.

Document WO 2024/081667 A1 discloses a perception system which may be used to generate bounding boxes for objects in a vehicle scene. The perception system may receive images and feature maps corresponding to the received images. The perception system may generate scene dependent radar-based object queries. The perception system may use the generated scene dependent radar-based object queries and scene independent object queries to generate one or more bounding boxes for objects in the vehicle scene.

### [Summary of Invention]

It is an object of some embodiments to localize/detect an object in a scene from features of multi-view images of the scene. As used herein, the multi-view images of the scene include depth and motion information and are acquired by different sensors of the same or different modalities. Examples of such sensors include radars arranged to have multiple planes of view to sense radar reflectivity of the scene from various perspectives including horizontal and vertical views.

Some embodiments are based on the realization that transformer neural networks with self- and cross-attention mechanisms focus on relevant parts of different input sequences, leading to more accurate and contextually aware outputs. Some embodiments take advantage of the cross-attention to seamlessly relate features of different radar images to form 2D+ embeddings of the object derived from the different radar images without a need to register and/or align the images together.

To this end, it is an object of some embodiments to perceive the object in the scene using a transformer neural network that exploits features from the multi-view radar images or reflectivity heatmaps of the scene. In an embodiment, the multi-view radar images include but not limited to a horizontal view radar image and a vertical view radar image of the scene. The horizontal view radar image and the vertical view radar image are collected from a pair of horizontal and vertical antenna arrays. The horizontal antenna array and the vertical antenna array transmit a set of radar pulses, e.g., frequency modulated continuous waveform (FMCW), for object detection in the scene. Further, the horizontal antenna array generates the horizontal view radar image in an azimuth-depth (x-y) domain and the vertical antenna array generates the vertical view radar image in an elevation-depth (z-y) domain.

The transformer neural network includes an encoder and a decoder. The encoder is input with selected features of the horizontal view radar image and the vertical view radar image of the scene. The selected features correspond to the most relevant features of the horizontal view radar image and the vertical view radar image selected by applying top-K selection on the features of the horizontal view radar image and the vertical view radar image. The encoder is configured to output a set of encoded features from the selected features of the horizontal view radar image and the vertical view radar image.

The set of encoded features include encoded features of the horizontal view radar image and encoded features of the vertical view radar image. The encoded features of the horizontal view radar image and the encoded features of the vertical view radar image include features of the object. Some embodiments are based on the recognition that it is difficult and tedious to associate the object features present in the encoded features of the horizontal view radar image and with the object features present in the encoded features of the vertical view radar image. In other words, it is difficult to associate features of the object in the horizontal view radar image with features of the object in the vertical view radar image.

Some embodiments are based on the realization that, such a problem can be mitigated, by inputting the decoder with randomly initialized object queries. The decoder is configured to update the object queries based on a cross-attention between the object queries and the encoded features from both the horizontal and vertical view radar images. Such a cross attention places high attention on the encoded features of the same object in encoded features from both the horizontal and vertical view radar images. As such, the object query is able to learn three dimensional (3D) spatial embedding of the object in radar coordinate. Thereby, the updated object queries include the object queries with 3D spatial embeddings. Such updated queries is referred to as the 2D+ embeddings of the object. Such 2D+ embeddings can be further extended to the motion embedding by utilizing the Doppler heatmap of the radar images.

Further, based on the 2D+ embeddings, a two dimensional bounding box around the object is determined. In particular, based on the 2D+ embeddings, a three dimensional bounding box in the radar coordinate is estimated. The estimated three dimensional box in the radar coordinate is converted into a three dimensional bounding box in camera coordinate based on a radar-camera coordinate transformation. The three dimensional bounding box in the camera coordinate is projected onto a two dimensional image plane to determine the two dimensional bounding box around the object to detect the object.

Such an object detection pipeline including the transformer neural network and the geometric transformation & projection is advantageous. For example, the transformer neural network performs the object localization/detection in a single end-to-end process without involving multiple stages (e.g., region proposal and classification). Also, the object detection using the transformer neural network doesn't include a post-processing step like Non-Maximum Suppression (NMS) to filter overlapping bounding boxes. Therefore, such an end-to-end object process simplifies training and inference pipeline.

In an embodiment, the encoder of the transformer neural network associates the selected features from both the horizontal and vertical view radar images by applying a self-attention over a pool of multi-view radar tokens 'H'. Specifically, an encoder layer '1' updates the multi-view radar tokens through multi-head self-attention Att_{self} as${H}^{l + 1} = {\overline{H}}^{l} + FFN \left({\overline{H}}^{l}\right) , {\overline{H}}^{l} = {H}^{l} + {Att}_{self} \left(Que\left({H}^{l}\right), Key\left({H}^{l}\right), Val\left({H}^{l}\right)\right)$ where FFN denotes feed forward networks, and Que, Key and Val are projections to derive multi-head query, key and value embeddings from H, respectively.

However, the multi-view radar tokens lack positional information. To provide information about positions of the tokens in the pool of multi-view radar tokens, positional embedding is concatenated with the features of the horizontal view radar image and the vertical view radar image.

The positional embedding is composed of a depth (y) dimension and an angular (either azimuth x for the horizontal radar view image or elevation z for the vertical radar view image) dimension. As such, the positional embedding includes depth positional embedding and angular positional embedding. Some embodiments are based on observation that the horizontal view radar image and the vertical view radar image share the depth dimension and depth similarity remains consistent regardless of whether the key and query originate from the same view images or different view images. Some embodiments are based on further observation that angular similarity can be a self-angular similarity (azimuth-to-azimuth or elevation-to-elevation) when the key and query are from the same view images, or a cross-angular similarity (azimuth-to-elevation or elevation-to-azimuth) for different view images.

Based on such observations, it is realized that allowing for adjustable dimensions between depth and angular positional embeddings, promotes higher similarity scores for keys and queries with similar depth positional embeddings than those far apart in depth, especially for the ones from different views. The dimensions between the depth and angular positional embeddings can be adjusted by tuning a dimension ratio. The dimension ratio changes dimensions of the depth and angular positional embeddings while keeping a total dimension of the positional embedding constant. Therefore, such a positional embedding with the tuneable dimension ratio prioritizes the relative importance of depth dimension and avoids exhaustive feature associations between the horizontal view radar image and the vertical view radar image.

In an embodiment, it is realized that the dimension ratio in the positional embedding can be pre-determined, rather than being optimized during training process. To avoid an exhaustive search of the dimension ratio, a differentiable mask is utilized to automatically adjust the dimension ratio during the training for enhanced performance.

Accordingly, one embodiment discloses a system for perceiving an object in a scene. The system comprises a processor, and a memory having instructions stored thereon that, when executed by the processor, cause the system to: collect features of a first radar image of the scene captured from a first sensor and a second radar image of the scene captured from a second sensor, each of the first radar image and the second radar image includes depth data; process selected features of the collected features with a transformer neural network having a transformer architecture with self-attention over the selected features and cross-attention between queries and the selected features to produce 2D+ embeddings of the object; process the 2D+ embeddings with a detection neural network to perceive the object and produce an image of the scene with markings of the perceived object; and output the image of the scene with the markings of the perceived object.

Accordingly, another embodiment discloses a method for perceiving an object in a scene. The method comprises collecting features of a first radar image of the scene captured from a first sensor and a second radar image of the scene captured from a second sensor, each of the first radar image and the second radar image includes depth data. The method further comprises processing selected features of the collected features with a transformer neural network having a transformer architecture with self-attention over the selected features and cross-attention between queries and the selected features to produce 2D+ embeddings of the object. The method further comprises processing the 2D+ embeddings with a detection neural network to perceive the object and produce an image of the scene with markings of the perceived object, and outputting the image of the scene with the markings of the perceived object.

Accordingly, yet another embodiment discloses a non-transitory computer-readable storage medium embodied thereon a program executable by a processor for performing a method for perceiving an object in a scene. The method comprises collecting features of a first radar image of the scene captured from a first sensor and a second radar image of the scene captured from a second sensor, each of the first radar image and the second radar image includes depth data. The method further comprises processing selected features of the collected features with a transformer neural network having a transformer architecture with self-attention over the selected features and cross-attention between queries and the selected features to produce 2D+ embeddings of the object. The method further comprises processing the 2D+ embeddings with a detection neural network to perceive the object and produce an image of the scene with markings of the perceived object, and outputting the image of the scene with the markings of the perceived object.

The presently disclosed embodiments will be further explained with reference to the attached drawings. The drawings shown are not necessarily to scale, with emphasis instead generally being placed upon illustrating the principles of the presently disclosed embodiments.

### [Brief Description of Drawings]

[FIG. 1A]

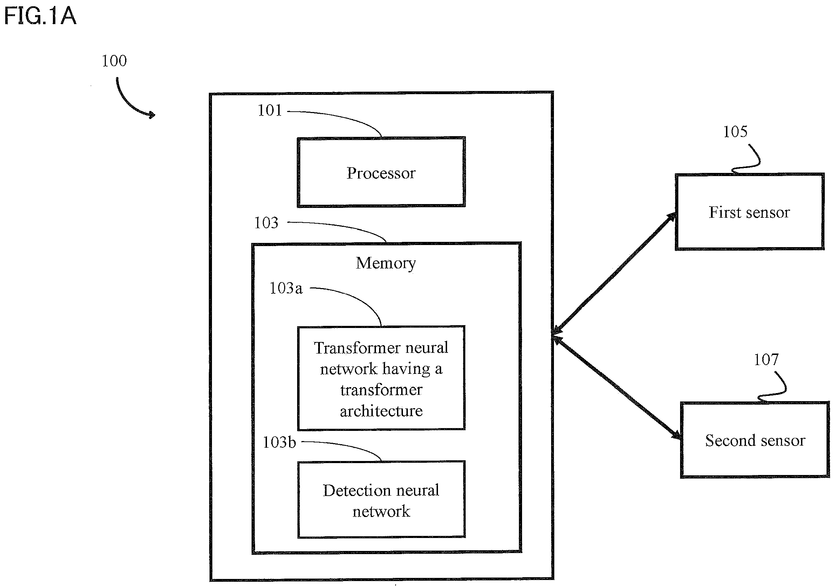

   FIG. 1A illustrates a system for perceiving an object in a scene, according to some embodiments of the present disclosure.
[FIG. 1B]

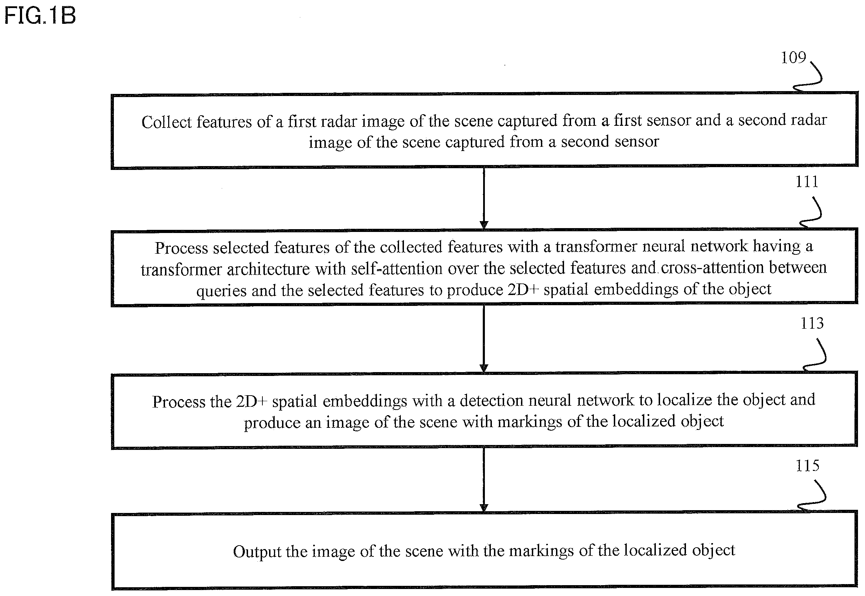

   FIG. 1B illustrates a block diagram for perceiving of the object in the scene, according to some embodiments of the present disclosure.
[FIG. 1C]

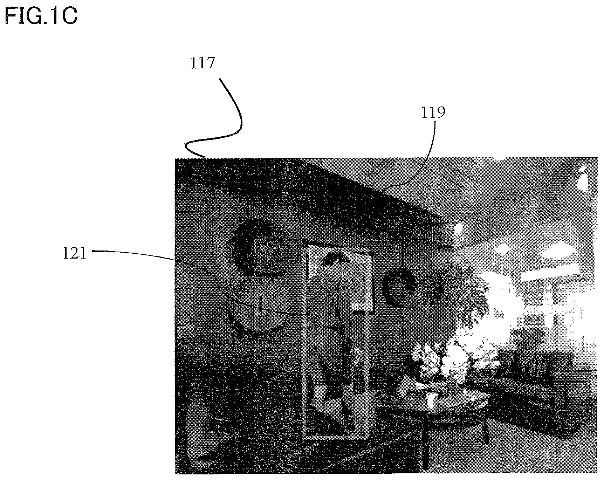

   FIG. 1C shows an example output image of the scene with a two dimensional bounding box around the object present in the scene, according to some embodiments of the present disclosure.
[FIG. 2A]

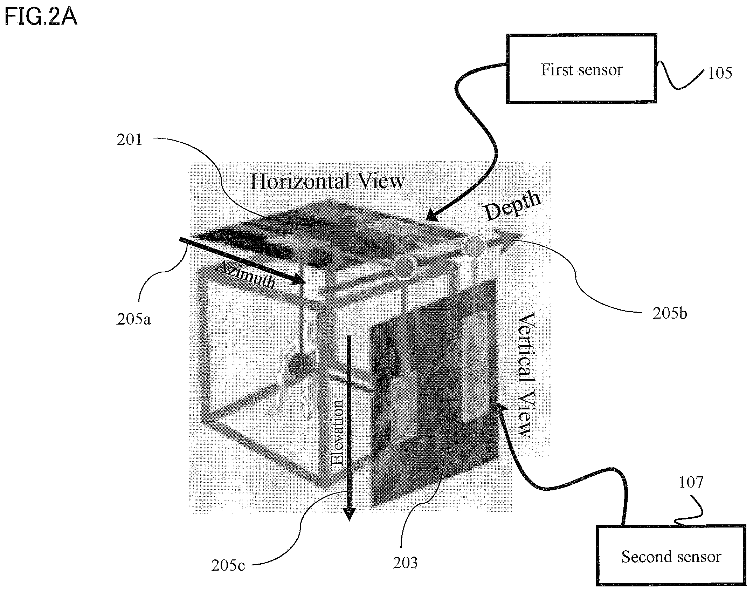

   FIG. 2A illustrates an example first radar image captured by a first sensor and a second radar image captured by a second sensor, according to some embodiments of the present disclosure.
[FIG. 2B]

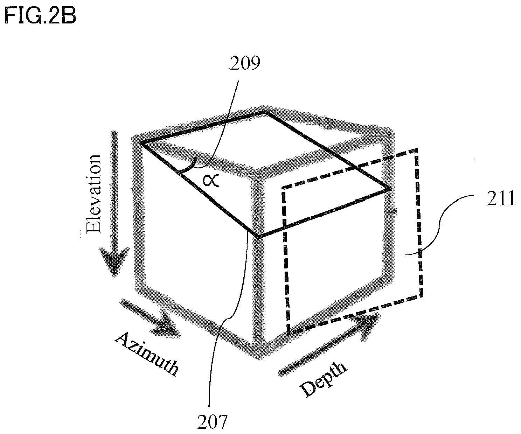

   FIG. 2B illustrates an example first radar image of the scene oriented at an angle and a vertical view image of the scene, according to some embodiments of the present disclosure.
[FIG. 2C]

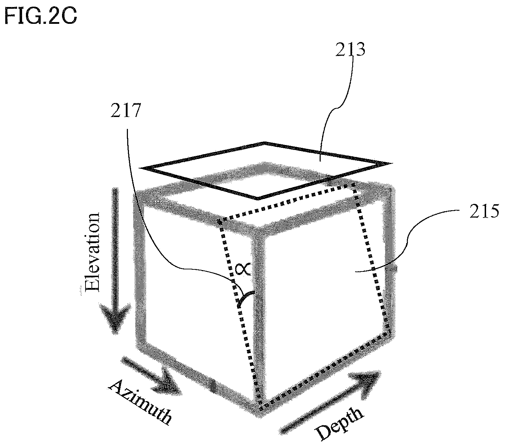

   FIG. 2C illustrates an example horizontal view image of the scene and a second radar image of the scene oriented at a certain angle, according to some embodiments of the present disclosure.
[FIG. 2D]

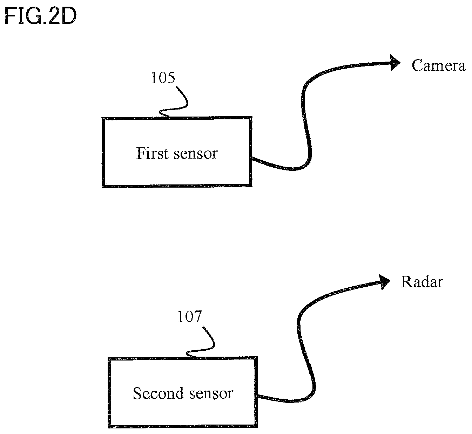

   FIG. 2D illustrates that the first sensor is a camera and the second sensor is a radar, according to some embodiments of the present disclosure.
[FIG. 2E]

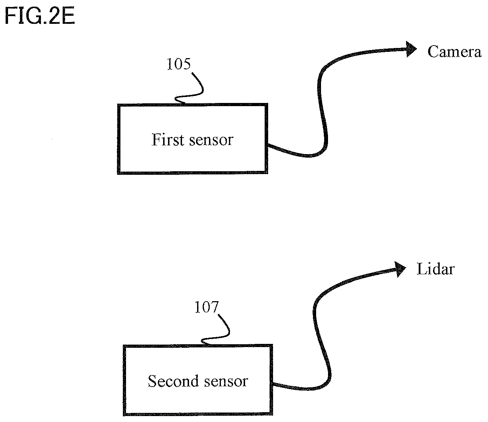

   FIG. 2E illustrates that the first sensor is the camera and the second sensor is a LiDAR, or Light Detection And Ranging, according to some embodiments of the present disclosure.
[FIG. 3A1]

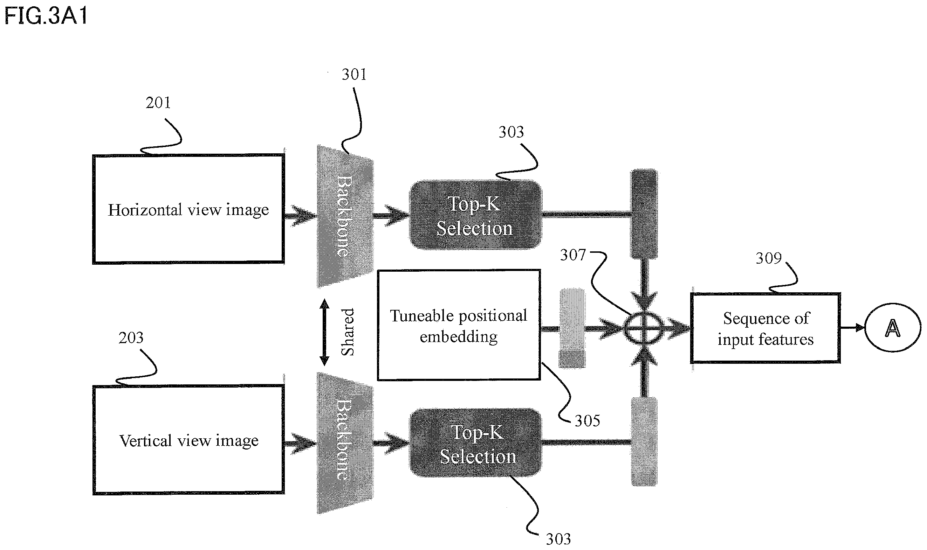

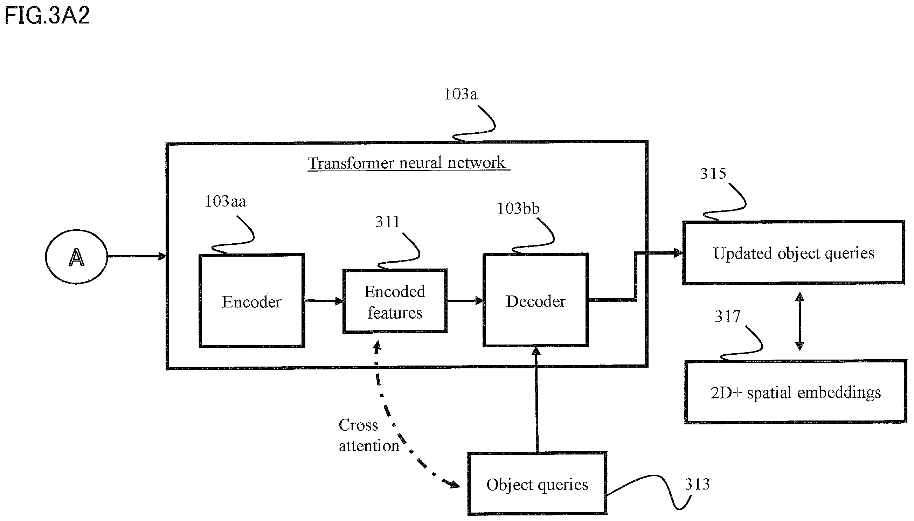

   FIG. 3A1 shows a block diagram for producing 2D+ embeddings of the object, according to some embodiments of the present disclosure.
[FIG. 3A2]
   FIG. 3A2 shows a block diagram for producing 2D+ embeddings of the object, according to some embodiments of the present disclosure.
[FIG. 3B]

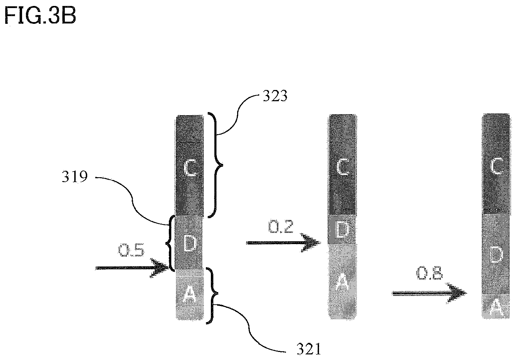

   FIG. 3B illustrates adjusting dimensions between depth and angular positional embeddings by tuning a dimension ratio, according to some embodiments.
[FIG. 4A]

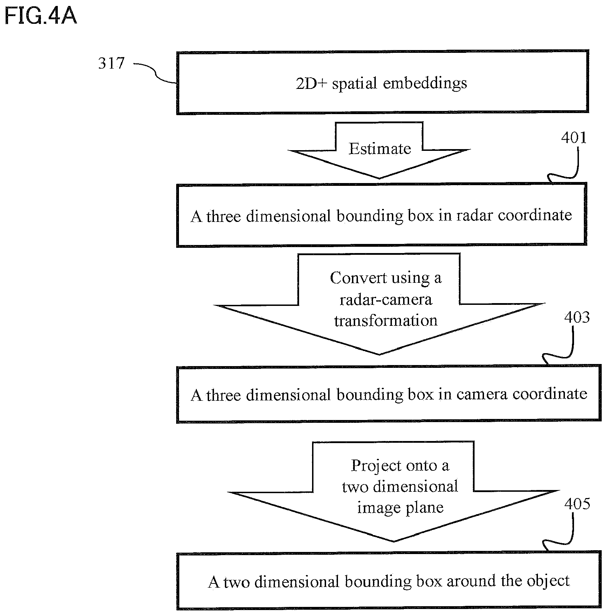

   FIG. 4A illustrates a block diagram for determining the two dimensional bounding box around the object based on the 2D+ embeddings, according to some embodiments of the present disclosure.
[FIG. 4B]

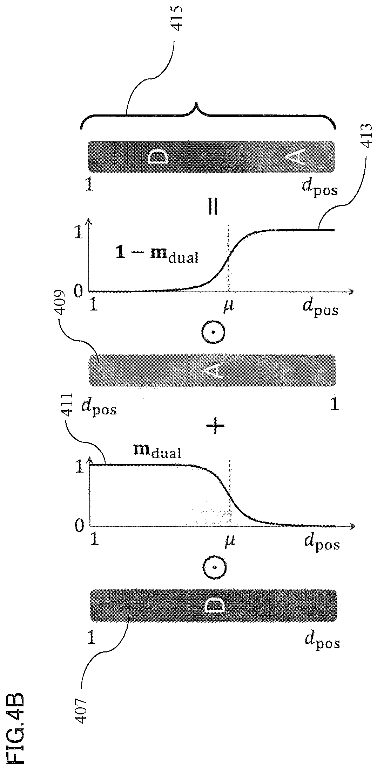

   FIG. 4B illustrates a differentiable positional encoding, according to some embodiments of the present disclosure.
[FIG. 5]

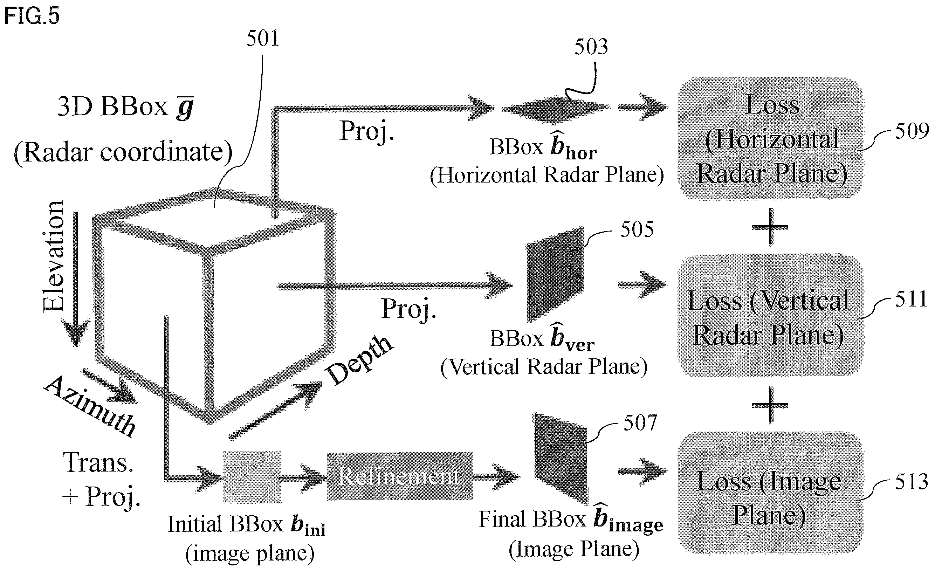

   FIG. 5 illustrates a tri-plane bounding box loss, according to some embodiments of the present disclosure.
[FIG. 6A]

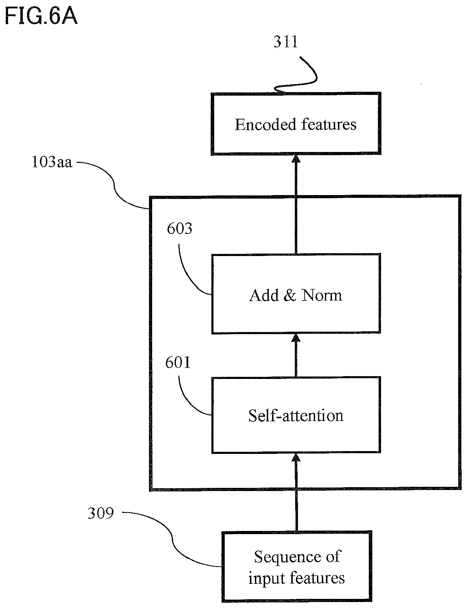

   FIG. 6A shows a block of an encoder of a transformer neural network, according to some embodiments of the present disclosure.
[FIG. 6B]

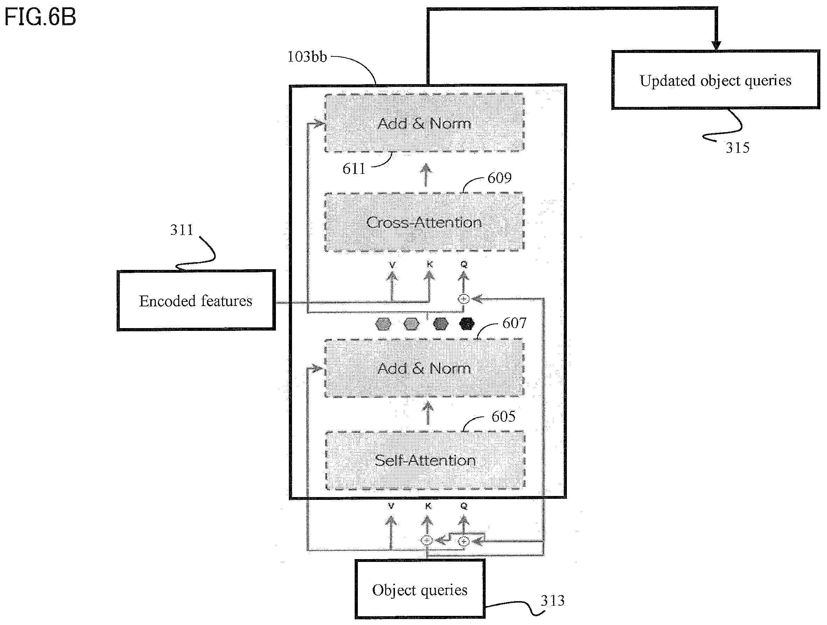

   FIG. 6B shows a block of a decoder of the transformer neural network, according to some embodiments of the present disclosure.
[FIG. 7A]

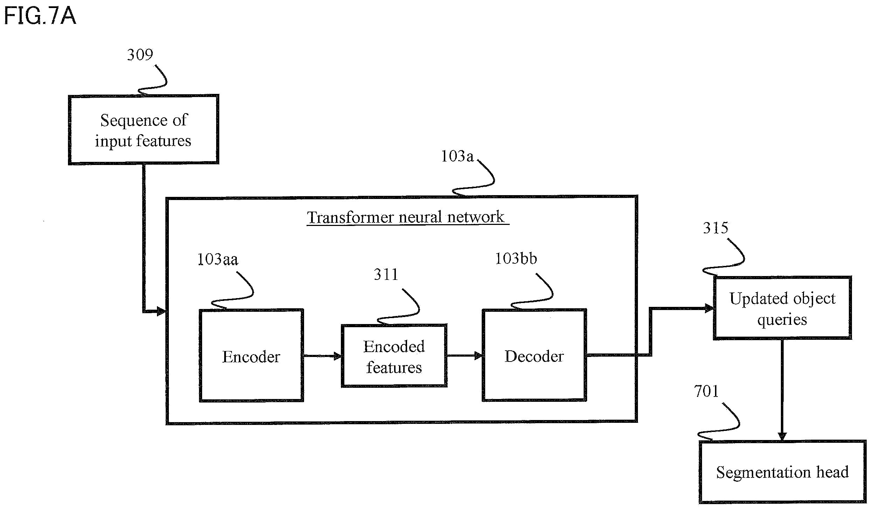

   FIG. 7A shows the transformer neural network extended by adding a segmentation head, according to some embodiments of the present disclosure.
[FIG. 7B]

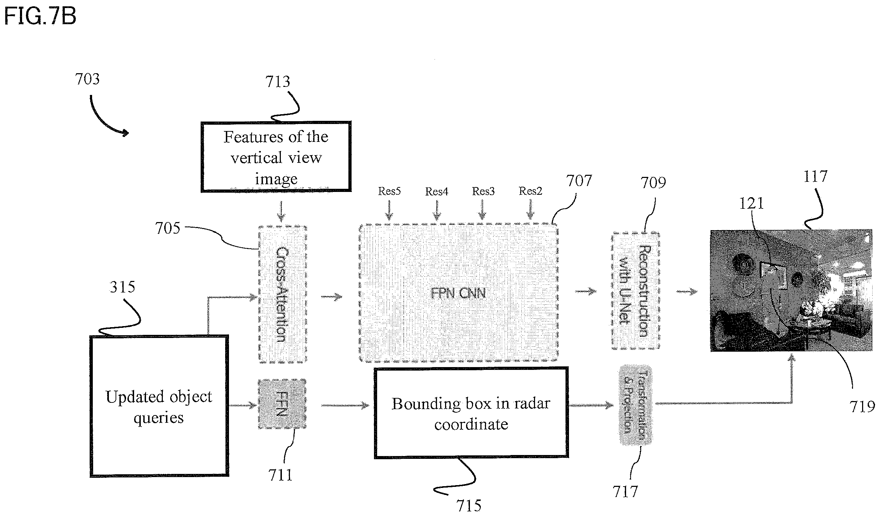

   FIG. 7B shows an architecture of the segmentation head, according to some embodiments of the present disclosure.
[FIG. 8]

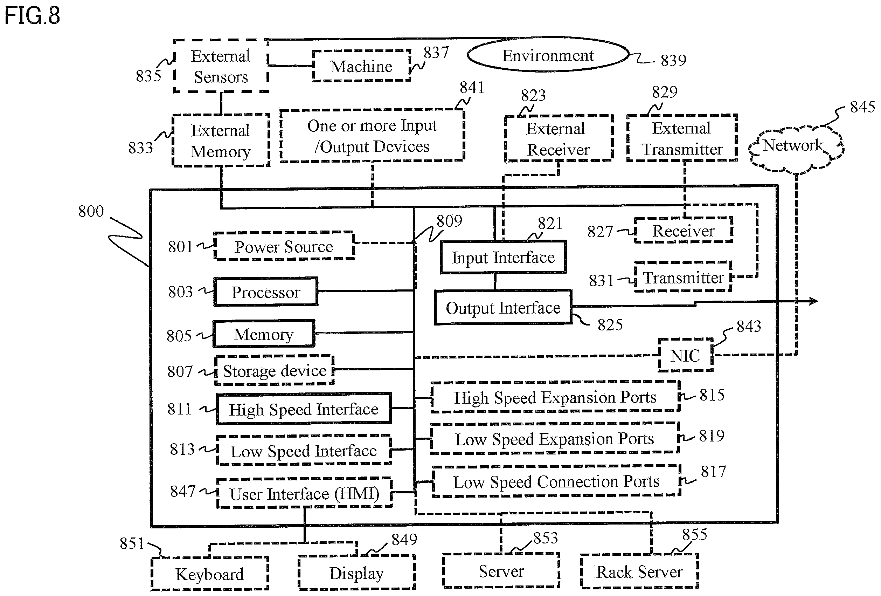

   FIG. 8 is a schematic illustrating by non-limiting example a computing apparatus for implementing the methods and the systems of the present disclosure.

### [Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

FIG. 1A illustrates a system 100 for perceiving an object in a scene, according to some embodiments of the present disclosure. The perceiving of the object includes one or more of localization of the object, instance segmentation of the object, and pose estimation. The system 100 includes a processor 101 and a memory 103. The processor 101 may be a single core processor, a multi-core processor, a computing cluster, or any number of other configurations. The memory 103 may include random access memory (RAM), read only memory (ROM), flash memory, or any other suitable memory systems. Additionally, in some embodiments, the memory 103 may be implemented using a hard drive, an optical drive, a thumb drive, an array of drives, or any combinations thereof.

The system 100 is communicatively coupled to a first sensor 105 and a second sensor 107. The first sensor 105 and the second sensor 107 are installed at different locations in the scene to capture multi view images of the scene. The scene may correspond to an indoor environment space, for example, an indoor space of a room in a building. The first sensor 105 is configured to capture a first radar image of the scene and the second sensor 107 is configured to capture a second radar image of the scene. The first radar image and the second radar image correspond to different views of the scene and each of the first radar image and the second radar image includes depth data. The first radar image and the second radar image are explained in detail in FIG. 2A.

The first radar image and the second radar image are transmitted to the system 100. The memory 103 of the system 100 includes a transformer neural network 103a having a transformer architecture, and a detection neural network 103b. The processor 101 of the system 100 is configured to perceive the object in the scene by processing the first radar image and the second radar image with the transformer neural network 103a and the detection neural network 103b, as explained below in FIG. 1B.

FIG. 1B illustrates block diagram for perceiving of the object in the scene, according to some embodiments of the present disclosure. At block 109, the processor 101 is configured to collect features of the first radar image of the scene captured from the first sensor 105 and the second radar image of the scene acquired from the second sensor 107. In an embodiment, to collect the features from the first radar image and the second radar image, the processor 101 processes the first radar image and the second radar image with a neural network, e.g., a residual neural network, and generates the features of the first radar image and the second radar image. Additionally, in some embodiments, the processor 101 is configured to select the most relevant features from the features of the first radar image and the second radar image by applying top-K selection on the features of the first radar image and the second radar image.

Some embodiments are based on realizing that the transformer neural network 103a having a transformer architecture with cross-attention mechanisms focus on relevant parts of different its input sequences, leading to more accurate and contextually aware outputs. Some embodiments take advantage of the cross-attention to seamlessly relate features of different images to form 2D+ embeddings of the object derived from the different images without a need to register and/or align the images together.

To this end, at block 111, the processor 101 is configured to process selected features of the collected features with the transformer neural network 103a having a transformer architecture with self-attention over the selected features and the cross-attention between object queries and the selected features to produce 2D+ embeddings of the object. This step of producing the 2D+ embeddings of the object is explained in detail in FIG. 3A1 and FIG. 3A2.

At block 113, the processor 101 is configured to process the 2D+ embeddings with the detection neural network 103b to perceive the object and produce an image of the scene with markings of the perceived object. This step of producing the image of the scene with markings of the perceived object is explained in detail in FIG. 4.

At block 115, the processor 101 is configured to output the image of the scene with the markings of the perceived object. The markings of the perceived object include a two dimensional bounding box around the object.

FIG. 1C shows an example output image 117 of the scene with a two dimensional bounding box 119 around an object 121 present in the scene, according to some embodiments of the present disclosure. The object 121 may be a stationary or moving object, such as, a person. The bounding box 119 specifies a location of the object 121 in the scene. Further, in some embodiments, the two dimensional bounding box 119 specifies dimensions of the object 121, e.g., a height of the object 121 and a width of the object 121. Additionally, in some embodiments, the bounding box 119 specifies a velocity of the object 121.

FIG. 2A illustrates an example first radar image captured by the first sensor 105 and the second radar image captured by the second sensor 107, according to some embodiments of the present disclosure. The first sensor 105 and the second sensor 107 are arranged such that a plane of view of the first sensor 105 defining an orientation of the first radar image is different from a plane of view of the second sensor defining an orientation of the second radar image. In an embodiment, the first sensor 105 and the second sensor 107 are arranged such that a plane of view of the first sensor 105 defining an orientation of the first radar image is perpendicular to a plane of view of the second sensor defining an orientation of the second radar image.

For instance, the first sensor 105 and the second sensor 107 are radars and are arranged such that the first sensor 105 captures a horizontal view image 201 and the second sensor 107 captures a vertical view image 203 of the scene. The horizontal view image 201 and the vertical view image 203 correspond to the first radar image and the second radar image, respectively. The horizontal view image 201 and the vertical view image 203 form a multi-view image of the scene. The horizontal view image 201 is defined by an azimuth dimension 205a and a depth dimension 205b, i.e., the horizontal view image 201 is captured in (x-y) domain. The second sensor 107 is defined by an elevation dimension 205c and the depth dimension 205b, i.e., the vertical view image 203 is captured in (z-y) domain. As it can noted from FIG. 2A, the horizontal view image 201 and the vertical view image 203 share the depth dimension 205b, thereby, both the horizontal view image 201 and the vertical view image 203 includes the depth data.

In some other embodiments, each of the horizontal view image 201 and the vertical view image 203 includes at least one of Radio Frequency (RF) reflectivity, phase, velocity and other motion information of the object present in the scene.

In some embodiments, the first sensor 105 and the second sensor 107 are arranged such that the first sensor 105 captures a first radar image 207 of the scene that is oriented at a certain angle (∝) 209 and the second sensor 107 captures a second radar image 211 which is a vertical view image of the scene (e.g., the vertical view image 203), as shown in FIG. 2B.

In some other embodiments, the first sensor 105 and the second sensor 107 are arranged such that the first sensor 105 captures a first radar image 213 which is a horizontal view image of the scene (e.g., the horizontal view image 201) and the second sensor 107 captures a second radar image 215 of the scene that is oriented at a certain angle (∝) 217, as shown in FIG. 2C.

In yet some other embodiments, the first radar image captured by the first sensor 105 and the second radar image captured by the second sensor 107 can be oriented at respective angles to capture different plane views of the scene.

Some embodiments are based on the realization that the first sensor 105 and the second sensor 107 can be of different modalities such that the multi-view image of the scene is multimodal. For example, in an embodiment, the first sensor 105 is a camera, and the second sensor 107 is a radar, as shown in FIG. 2D. The camera may be a visible-light video cameras, also referred to as red, green, blue (RGB) camera. In another embodiment, the first sensor 105 is the camera, and the second sensor 107 is a LiDAR, or Light Detection And Ranging, as shown in FIG. 2E. LiDAR uses laser beams to measure precise distances and movement in the scene, in real time.

In an embodiment, the processor 101 is configured to process the horizontal view image 201 and the vertical view image 203 with the transformer neural network 103a to produce the 2D+ embeddings, as described below in FIG. 3A1 and FIG. 3A2.

FIG. 3A1 and FIG. 3A2 show a block diagram for producing the 2D+ embeddings, according to some embodiments of the present disclosure. The processor 101 processes the horizontal view image 201 and the vertical view image 203 with a shared backbone neural network 301, e.g., a residual neural network, and generates features of the horizontal view image 201 and the vertical view image 203. Further, the processor 101 is configured to apply top-K selection 303 on the features of the horizontal view image 201 and the vertical view image 203 to select the most relevant features from the features of the horizontal view image 201 and the vertical view image 203. Such selected features reduce time and space complexity for the transformer neural network 103a.

The selected features are fed to an encoder 103aa of the transformer neural network 103a. In an embodiment, the encoder 103aa associates the features from both from the horizontal view image 201 and the vertical view image 203 by applying the self-attention over a pool of multi-view radar tokens 'H'. Specifically, an encoder layer '1' updates the multi-view radar tokens through multi-head self-attention Att_{self} as${H}^{l + 1} = {\overline{H}}^{l} + FFN \left({\overline{H}}^{l}\right) , {\overline{H}}^{l} = {H}^{l} + {Att}_{self} \left(Que\left({H}^{l}\right), Key\left({H}^{l}\right), Val\left({H}^{l}\right)\right)$ where FFN denotes feed forward networks, and Que, Key and Val are projections to derive multi-head query, key and value embedding from H, respectively.

However, the multi-view radar tokens lack positional information. To provide information about positions of the tokens in the pool of multi-view radar tokens, positional embedding is concatenated with the selected features of the horizontal view image 201 and the vertical view image 203. The processor 101 is configured to apply tuneable positional embedding 305 to compute the positional embedding.

The positional embedding is composed of a depth (y) dimension and an angular (either azimuth x or elevation z) dimension. As such, the positional embedding includes depth positional embedding and angular positional embedding. Some embodiments are based on observation that the horizontal view image 201 and the vertical view image 203 share the depth dimension and depth similarity remains consistent regardless of whether the key and query originate from the same view images or different view images. Some embodiments are based on further observation that angular similarity can be a self-angular similarity (azimuth-to-azimuth or elevation-to-elevation) when the key and query are from the same view images, or a cross-angular similarity (azimuth-to-elevation or elevation-to-azimuth) for different view images.

Based on such observations, it is realized that allowing for adjustable dimensions between depth and angular positional embeddings, promotes higher similarity scores for keys and queries with similar depth positional embeddings than those far apart in depth, especially for the ones from different views. The dimensions between the depth and angular positional embeddings can be adjusted by tuning a dimension ratio. The dimension ratio changes dimensions of the depth and angular positional embeddings while keeping a total dimension of the positional embedding constant. Therefore, such a positional embedding with the tuneable dimension ratio prioritizes the relative importance of depth dimension and avoids exhaustive feature associations between the horizontal view image and the vertical view image. Such a positional embedding with the tuneable dimension ratio is referred to as the tuneable positional embedding 305.

FIG. 3B illustrates adjusting dimensions between the depth and angular positional embeddings by tuning the dimension ratio, according to some embodiments. The tuneable dimension ratio lies in an interval [0, 1]. By tuning the dimension ratio to different values, such as 0.5, 0.2, and 0.8, dimension 319 of depth positional embedding 'D' and dimension 321 of angular positional embedding 'A' are adjusted while keeping the total dimension of the positional embedding constant. Further, for the different values of the dimension ratio, dimension 323 of content/feature embedding 'C' remains unchanged. The positional embedding is computed with a particular value of the dimension ratio.

Referring back to FIG. 3A1 and FIG. 3A2, the processor 101 is further configured to concatenate 307 the positional embedding with the selected features of the horizontal view image 201 and the vertical view image 203 to produce a sequence of input features 309. The sequence of input features 309 is input to the encoder 103aa.

The encoder 103aa is configured to output a set of encoded features 311 from the sequence of input features 309. The set of encoded features include encoded features of the horizontal view image 201 and encoded features of the vertical view image 203. The encoded features of the horizontal view image 201 and the encoded features of the vertical view image 203 include features of the object. Some embodiments are based on the recognition that it is difficult and tedious to associate the object features present in the encoded features of the horizontal view image and with the object features present in the encoded features of the vertical view image. In other words, it is difficult to associate features of the object in the horizontal view image 201 with features of the object in the vertical view image 203.

Some embodiments are based on the realization that, such a problem can be mitigated, by inputting a decoder 103bb with randomly initialized object queries 313. The decoder 103bb is configured to update the object queries 313 based on a cross-attention between the object queries 313 and the encoded features 311 of the both the horizontal view image 201 and the vertical view image 203, to produce updated object queries 315. Such a cross attention places high attention on the encoded features of the same object in the encoded features 311 of the both the horizontal view image 201 and the vertical view image 203. As such, the object query is able to learn three dimensional (3D) spatial embedding of the object in radar coordinate. Thereby, the updated object queries 315 include the object queries with 3D spatial embeddings. Such updated object queries 315 is referred to as 2D+ embeddings 317.

Further, the 2D+ embeddings 317 are processed with the detection neural network 103b to determine the two dimensional bounding box 119 around the object 121. The detection neural network 103b is configured to estimate a three dimensional bounding box in the radar coordinate based on the 2D+ embeddings, covert the estimated three dimensional box in the radar coordinate into a three dimensional bounding box in camera coordinate, and project the three dimensional bounding box in the camera coordinate onto a two dimensional image plane to determine the two dimensional bounding box 119 around the object 121.

FIG. 4A illustrates a block diagram for determining the two dimensional bounding box 119 around the object 121 based on the 2D+ embeddings 317, according to some embodiments of the present disclosure. The processor 101 is configured to estimate a three dimensional bounding box 401 around the object in the radar coordinate based on the 2D+ embeddings 317. The processor 101 is further configured to covert the estimated three dimensional box 401 in the radar coordinate into a three dimensional bounding box in camera coordinate 403 based on a radar-camera transformation.

In some embodiments, the radar-camera transformation involves a rotation matrix and a translation vector. The rotation matrix and the translation vector can be calibrated in advance. However, this calibration process may be accurate only for a limited interval of depth and angles. Some embodiments are based on the realization that instead of relying on such a calibrated transformation, a learnable transformation can be formulated via reparameterization on the rotation matrix while preserving orthonormal (i.e., 3D special orthogonal group SO(3)) structure of the rotation matrix. Therefore, the learnable transformation is used convert the three dimensional box in the radar coordinate 401 into the three dimensional bounding box in the camera coordinate 403.

Further, the processor 101 is configured to project the three dimensional bounding box in the camera coordinate 403 onto a two dimensional image plane to determine the two dimensional bounding box 405 around the object to detect the object. The determined two dimensional bounding box 405 corresponds to the two dimensional bounding box 119 around the object 121.

Such an object detection pipeline including the transformer neural network shown in FIG. 3A1 and FIG. 3A2 and transformation and projection described in FIG. 4A is referred to as a radar detection transformer architecture. The radar detection transformer architecture is advantageous. For example, the radar detection transformer architecture can be used to perform the object localization/detection in a single end-to-end process without involving multiple stages (e.g., region proposal and classification). Also, the object detection using the radar detection transformer architecture doesn't include a post-processing step like Non-Maximum Suppression (NMS) to filter overlapping bounding boxes. Therefore, such an end-to-end object process simplifies training and inference pipeline.

The radar detection transformer architecture is mathematically described below.

In an embodiment, the horizontal view image 201 and the vertical view image 203 are collected from a pair of horizontal and vertical antenna arrays with Nant elements for each array. The horizontal antenna array and the vertical antenna array transmit a set of frequency modulated continuous waveform (FMCW) pulses for object detection in the scene. Further, the horizontal antenna array generates the horizontal view image in the azimuth-depth (x-y) domain and the vertical antenna array generates the vertical view image in the elevation-depth (z-y) domain, $\begin{matrix}{y}_{hor} \left(t, x, y\right) = {\sum }_{k = 1}^{{k}_{p}} {\sum }_{m = 1}^{M} {s}_{k , m , t} {e}^{j 2 π \frac{{d}_{m} \left(x, y\right)}{{λ}_{k}}} , \\ {y}_{ver} \left(t, x, y\right) = {\sum }_{k = 1}^{{k}_{p}} {\sum }_{m = 1}^{M} {s}_{k , m , t} {e}^{j 2 π \frac{{d}_{m} \left(x, y\right)}{{λ}_{k}}} ,\end{matrix}$ (1) where s_{k,m,t} denotes k-th sample of FMCW sweep on m-th antenna at time t, λₖ is wavelength of the k-th sample, dₘ(x, y, z) denotes a round-trip distance from the m-th array element to a position (x, y, z), and Kₚ and M denote a number of samples and a number of array antennas, respectively. The azimuth x is in an interval of x ∈ X = [xₘᵢₙ : Δx : xₘₐₓ ] and the elevation z and the depth y are similarly defined. At a particular time t, the horizontal view image 201 is given as ${Y}_{hor} \left(t\right) = {\left\{\left|{y}_{hor}\left(t, x, y\right)\right|\right\}}_{x ϵ X}^{y ϵ Y} ϵ {R}^{h \times D}$ and the vertical view image 203 as ${Y}_{ver} \left(t\right) = {\left\{\left|{y}_{ver}\left(t, x, y\right)\right|\right\}}_{z ϵ Z}^{y ϵ Y} ϵ {R}^{h \times D}$ with a shared depth axis.

Some embodiments are based on an objective of detecting objects on the image plane by taking T consecutive multi-view radar images (y*ₕₒᵣ∈R^{T×W×D}*) and (*yᵥₑᵣ∈R^{T×W×D}*) as input ${F}_{image} = {proj}_{image} \left(T\left(f\left({Y}_{hor ,}{Y}_{ver}\right)\right)\right)$ (2) where *F_{image}* denotes predicted bounding boxes (BBoxes) for object detection and pixel-level masks for instance segmentation of the object.

Given (*yₕₒᵣ∈R^{T×W×D}*) and (*yᵥₑᵣ∈R^{T×W×D}*), the shared backbone network 301 generates separate horizontal-view and vertical-view radar feature maps: ${Z}_{hor} = backbone \left({Y}_{hor}\right) ϵ {ℝ}^{c \times \frac{W}{s} \times \frac{D}{s}}$ and ${Z}_{ver} = backbone \left(\left({Y}_{hor}\right)ϵ\left({Y}_{hor}\right)ϵ {ℝ}^{c \times \frac{W}{s} \times \frac{D}{s}}\right.$ where C and s represent a number of channels and downsampling ratio over a spatial dimension, respectively.

The encoder 103aa expects a sequence of tokens as input. This is done by mapping the feature maps into a sequence of P multi-view radar tokens $H = \left[{H}_{hor}, {H}_{ver}\right] ∈ {ℝ}^{C \times P} : {Z}_{hor} \to {H}_{hor} ∈ {ℝ}^{C \times {P}_{hor}} and {Z}_{ver} \to {H}_{ver} ∈ {R}^{C \times {P}_{ver}} ,$ where $P = {P}_{hor} + {P}_{ver}$

The encoder 103aa provides a simple yet effective method for associating the features from both the horizontal and vertical view images by applying the self-attention over the pool of P multi-view radar tokens $H = \left[{H}_{hor}, {H}_{ver}\right] ∈ {ℝ}^{C \times P}$ , eliminating a need for cumbersome association schemes. Specifically, the l-th (l=0, ... , L_{self}-1) encoder layer updates the multi-view radar tokens through the multi-head self-attention Att_{self}:${H}^{l + 1} = {\overline{H}}^{l} + FFN \left({\overline{H}}^{l}\right) , {\overline{H}}^{l} = {H}^{l} + {Att}_{self} \left(Que\left({H}^{l}\right), Key\left({H}^{l}\right), Val\left({H}^{l}\right)\right)$ (3) where FFN denotes feed-forward networks, L_{self} is a number of encoder layers, and Que, Key and Val are projections to derive multi-head query, key and value embedding H, respectively. For first (0-th) layer, *H*⁰=*H.*

The decoder 103bb provides a way to associate the same object query with the features from the horizontal and vertical view images via the cross-attention. For each decoder layer, it takes N object queries ${Q}^{l} = \left\{{q}_{1},…,{q}_{N}\right\} ∈ {ℝ}^{C \times N}$ as its input, and includes a self-attention layer, a cross-attention layer and a FFN. Specifically for l-th (l=0, ... , L_{cross}-1) decoder layer, the decoder 103bb first updates all the object queries through the multi-head self-attention: ${\overline{Q}}^{l} = {Q}^{l} + {Att}_{self} \left(Que\left({Q}^{l}\right), Key\left({Q}^{l}\right), Val\left({Q}^{l}\right)\right)$ (4) where Que, Key and Val are projections with different parameterization from those in the self-attention layer (Equation (3)). Then, the decoder layer further updates the object queries *Q̅^{l}* of equation (4) via the multi-head cross-attention with the multi-view radar tokens *H^{L_{self}}* from the encoder's 103aa output:${Q}^{l + 1} = {{Q}^{˜}}^{l} + FFN \left({{Q}^{˜}}^{l}\right) , {{Q}^{˜}}^{l} = {{Q}^{˜}}^{l} + {Att}_{cross} \left(Que\left({\overline{Q}}^{l}\right), Key\left({H}^{{L}_{self}}\right), Val\left({H}^{{L}_{self}}\right)\right)$ (5) where both *Q̅^{l}* and *H^{L_{self}}* are supplemented with the positional embedding. Finally, the decoder 103bb outputs N updated object queries *Q^{L_{cross}}* for downstream tasks.

Given the N updated object queries *Q^{L_{cross}},* the processor 101 estimates three dimensional (3D) BBoxes in the radar coordinate: $\overline{g} = {\left\{cx, cy, cz, w, h, d\right\}}^{T} = sigmoid \left(FFN\left(q\right)\right) , q ∈ {Q}^{{L}_{cross}}$ (6) where *g̅* describes 3D BBox center and respective widths along 3D axes, and sigmoid normalizes the 3D BBox prediction to [0,1]. Then, the radar-to-camera transformation 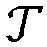 is applied to convert the 3D BBoxes to ones in 3D camera coordinate as: ${g}_{i m a g e}^{i} = {\left[{x}_{i m a g e}^{i} , {y}_{i m a g e}^{i} , {z}_{i m a g e}^{i}\right]}^{T} = T \left({g}_{r a d a r}^{i}\right) = R {g}_{r a d a r}^{i} + t , \text{i} = 1,2,..,8$ (7) where R is a 3D rotation matrix, $t ∈ {ℝ}^{3}$ is a 3D translation vector, and ${g}_{radar}^{i}$ is i-th corner of the 3D BBox corresponding to *g̅*. Subsequently, the 3D BBoxes ${g}_{image}^{i}$ are projected onto the two dimensional (2D) image plane via a 3D-to-2D projection. From projected 2D corners, 2D BBox center and width and height in the 2D image plane can be calculated as ${b}_{ini} = {\left\{cx, cy, w, h\right\}}^{T} = {proj}_{image} \left({G}_{image}\right)$ (8)

A final BBox estimation *b̂_{image}* in the 2D image plane is obtained by adding an offset head $FFN : {ℝ}^{10} \to {ℝ}^{4}$ to compensate for spatial downsampling and normalizing it to the interval [0, 1]: ${\hat{b}}_{image} = sigmoid \left({b}_{ini}+FFN\left({b}_{ini}⊕\overline{g}\right)\right)$ (9)

Some embodiments are based on the recognition that complexity of the transformer neural network 103a grows quadratically with respect to token length P. To maintain low complexity for the transformer neural network 103a, a customized Top-K feature selection as tokenization is introduced: ${H}_{hor} = Selector \left({Z}_{hor}\right) ∈ {ℝ}^{C \times K}$ and ${H}_{ver} = Selector \left({Z}_{ver}\right) ∈ {ℝ}^{C \times K}$, where K<< min {WD/s², HD/s²}. In this case, the multi-view radar tokens are shrink from P=(W+H)D/ s² to P=2K.

### Tunable positional embedding

The tunable positional embedding (TPE) 305 is built on top of concatenation operation between content embedding c (either feature embedding h at the encoder 103aa or object query q at the decoder 103bb) and positional embedding p in a conditional detection transformer, ${\left({c}_{que}⊕{q}_{que}\right)}^{T} {\left({c}_{key}⊕{q}_{key}\right)}^{T} = {c}_{que}^{T} {c}_{key} + {p}_{que}^{T} {p}_{key}$ (10) where ⊕ denotes concatenation, $\begin{matrix}{\left({c}_{que}⊕{q}_{que}\right)}^{T} {\left({c}_{key}⊕{q}_{key}\right)}^{T} = {c}_{que}^{T} {c}_{key} + {c}_{que}^{T} {p}_{key} + {p}_{que}^{T} {c}_{key} + \\ {p}_{que}^{T} {p}_{key} .\end{matrix}$ (11)

Some embodiments are based on the recognition that equation (10) eliminates cross terms between the content and positional embeddings in equation (11) and, allowing contenting/position embeddings focus on their respective attention weights, contributes to faster training convergence.

In some embodiments of the present disclosure, the positional embedding is composed of a depth (y) axis and an angular (either azimuth x or elevation z) axis. As such, *p = d* ⊕ *a* with 'd' representing the depth positional embedding and 'a' the angular positional embedding. Then expanding equation (10) with *p = d* ⊕ *a* leads to $\begin{matrix}{\left({c}_{que}⊕{d}_{que}⊕{a}_{que}\right)}^{T} {\left({c}_{key}⊕{d}_{key}⊕{a}_{key}\right)}^{T} = {c}_{que}^{T} {c}_{key} + {d}_{que}^{T} {d}_{key} + \\ {a}_{que}^{T} {a}_{key}\end{matrix}$ (12)

In equation (12), the following observations can be made:
*1.* ${c}_{que}^{T} {c}_{key}$ reflects how similar the features in the key and query may appear.
2. Depth similarity ${d}_{que}^{T} {d}_{key}$ remains consistent regardless of whether the key and query originate from the same view images or different view images.
3. Angular similarity ${a}_{que}^{T} {a}_{key}$ can be a self-angular similarity (azimuth-to-azimuth or elevation-to-elevation) when the key and query are from the same view images, or a cross-angular similarity (azimuth-to-elevation or elevation-to-azimuth) for the different view images.

Based on above observations, it is realized that higher similarity scores can be promoted for keys and queries with similar depth embeddings than those far apart in depth, especially for the ones from the different view images, by allowing for adjustable dimensions between the depth and angular positional embeddings: ${d}_{dep} = {αd}_{pos} , {d}_{ang} = \left(1-α\right) {d}_{pos} \to {d}_{dep} + {d}_{ang} = {d}_{pos} ,$ (13) where the tunable dimension ratio *α* is in the interval [0,1].

In some embodiments, the TPE is implemented with a fixed sine/cosine positional embedding along the depth and angular (azimuth or elevation) dimension. For an even depth/angular positional dimension, ${a}_{2 i} = sin \left(\frac{{p}_{deg}}{{T}^{\frac{2 i}{{d}_{dep}}}}\right) , {d}_{2 i + 1} = cos \left(\frac{{p}_{dep}}{{T}^{\frac{2 i}{{d}_{dep}}}}\right) , i = 0 , 1 , … , \frac{{d}_{dep}}{2} - 1 ,$ (14) ${a}_{2 i} = sin \left(\frac{{p}_{ang}}{{T}^{\frac{2 i}{{d}_{ang}}}}\right) , {d}_{2 i + 1} = cos \left(\frac{{p}_{ang}}{{T}^{\frac{2 i}{{d}_{ang}}}}\right) , i = 0 , 1 , … , \frac{{d}_{ang}}{2} - 1 ,$ (15) where *p*_{*dep*/*ang*} are position index and dimension for the depth and angular axes, respectively, i is an (even/odd) element index, and 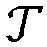 = 10000 is a temperature. By adjusting the tunable dimension ratio *α* in equation (12), dimensions of the depth d in equation (14) and the angular 'a' in equation (15), while keeping a total positional dimension of *p = d* ⊕ *a* constant.

### Differentiable positional encoding

Some embodiments are based on the recognition that the tunable dimension ratio *α* is to be determined by exhaustive pre-experiments. To avoid an exhaustive search of the tuneable dimension ratio by exhaustive pre-experiments, a differentiable mask is utilized to automatically adjust the tuneable dimension ratio during the training for enhanced performance.

A function h : [a, b]→ R, is to be non-zero only in a subset [c, d] ⊆ [a, b]. To this end, the function h can be multiplied with a mask m whose values are non-zero only on [c, d], e.g., a mask Π*_{c,d}*(*x*) = 1_{[c, d]}. However, as gradient of the mask is either zero or non-defined, it is not possible to learn an interval in which it is non-zero by backpropagation. To overcome this limitation, a parametric smooth mask m( , *θ*) is used which interval of non-zero values is defined by its parameters *θ*. By using this mask, the backpropagation can be applied to learn the interval on which it is non-zero as the mask is differentiable and learnable. In an embodiment, the mask m is parameterized by its offset and its temperature *θ* = {*u, τ*} as $m \left(x; θ\right) = 1 - \frac{1}{1 + exp \left(-τ\left(x-μ\right)\right)} , s . t . μ \geq 0$ (16)

The dimension ratio *α* is determined using a differentiable positional encoding (DiPE) that uses the mask m. In the DiPE, the processor 101 is configured to generate positional embeddings of dimension dₚₒₛ for each axis in advance. Then, using the parameters *θ*, the processor 101 is configured to generate a mask and apply the dual masking: $p = {m}_{dual} \left(θ\right) ⊙ d + \left(1-{m}_{dual}\left(θ\right)\right) ⊙ {a}_{f}$ (17) where *m_{dual}*(*θ*) = {*m*(1; *θ*), ... , *m*(*dₚₒₛ*; *θ*)}^{T} is a vector collected with each dimension i, 1 is a vector with all elements of 1, ⊙ represents Hadamard product, and f is an operation that flips order of the vector's elements ${a}_{f}^{\left(i\right)} = {a}^{\left({d}_{pos}+1-i\right)}$

An example of the implementation of (17) is to use a fixed sine/cosine positional encoding: ${p}^{2 i} = m \left(2i\right) sin \left(\frac{{p}_{dep}}{{T}^{\frac{2 i}{{d}_{pos}}}}\right) + \left(1-m\left(2i\right)\right) sin \left(\frac{{p}_{ang}}{{T}^{\frac{2 i}{{d}_{pos}}}}\right) ,$ (18) ${p}^{2 i + 1} = m \left(2i+1\right) sin \left(\frac{{p}_{dep}}{{T}^{\frac{2 i}{{d}_{pos}}}}\right) + \left(1-m\left(2i+1\right)\right) sin \left(\frac{{p}_{ang}}{{T}^{\frac{2 i}{{d}_{pos}}}}\right)$ where $i = 0 , 1 , … , \frac{{d}_{pos}}{2} - 1$, *p*_{*dep*/*ang*} is a position index, and T=10⁴ is a temperature. Attention weight is based on dot-product between query (q) and key (k): $\begin{matrix}{\left({m}_{dual}\left(θ\right)⊙{d}_{q}+\left(1-{m}_{dual}\left(θ\right)\right)⊙{a}_{f , q}\right)}^{T} \left({m}_{dual}\left(θ\right)⊙{d}_{k}+\left(\begin{matrix}1 - \\ {m}_{dual} \left(θ\right)\end{matrix}\right)⊙{a}_{f , q}\right) = {\left({\overline{d}}_{q}+{a}_{f , q}-{\overline{a}}_{f , q}\right)}^{T} \left({\overline{d}}_{k}+{a}_{f , k}-{\overline{a}}_{f , k}\right) \\ = {{\overline{d}}_{q}}^{T} {\overline{d}}_{k} + {\overline{a}}_{f , q}^{T} {\overline{a}}_{f , k} + {a}_{f , q}^{T} {\overline{d}}_{k} - {\overline{a}}_{f , q}^{T} {\overline{d}}_{k} + {{\overline{d}}_{q}}^{T} {a}_{f , k} - {{\overline{d}}_{q}}^{T} {\overline{a}}_{f , k} - {a}_{f , q}^{T} {\overline{a}}_{f , k} + \\ {a}_{f , q}^{T} {a}_{f , k} - {\overline{a}}_{f , q}^{T} {a}_{f , k}\end{matrix}$ where *x̅* = *m_{dual}*(*θ*))⊙)*x.* Equation (19) includes blended components according to *τ*.

FIG. 4B illustrates DiPE, according to some embodiments of the present disclosure. Depth positional embedding 407 and angular positional embedding 409 are multiplied with a differential mask *m_{dual}* 411 (given by Eq. (16)) and a complimentary mask 413 of the differential mask (1*-m_{dual}*), respectively, and summed up to obtain a blended positional embedding 415. The *m_{dual}* is a monotonically decreasing function with *θ*, and applying this mask has the effect of attenuating influence of latter dimensions of d. Conversely, 1-*m_{dual}* is a monotonically increasing function with *θ* that is in a dual relationship, and applying this mask attenuates influence of former dimensions of a. Therefore, adding these two together effectively blends the elements of d and a using *θ*, replacing the dimension ratio *α* described in Eq. (13) with learnable *θ*.

In an embodiment, the mask is implemented by using *θ* = {*µ, τ*} as learnable parameters and flows gradients to each of them. However, since these parameters are constrained within a specific range and may become large, it is essential to take these factors into account. Therefore, a sigmoid function and scaling factor is applied to unconstrained parameters *θ̅ =* {*µ̅, τ̅*}, allowing the mask to effectively operate across each dimension of the embedding: $μ = s \times sigmoid \left(\overline{μ}\right) , τ = sigmoid \left(\overline{τ}\right)$ (21) where $sigmoid \left(x\right) = \frac{1}{1 + exp \left(-x\right)}$. On the other hand, depending on initial values of *θ* and learning rate, the learning process may either fail to converge if the initial values are far from optimal, or the values may exhibit a small change from their initial values. To address this issue, a module is designed using a multi-layer perceptron (MLP): $\overline{θ} = \left\{\overline{μ}, \overline{τ}\right\} = MLP \left(e\right) , s . t . e ϵ {ℝ}^{{d}_{e}}$ (22) where e is a learnable parameter for generating *θ̂* and is initialized with normal distribution. In an embodiment, dₑ is set as dₑ=32, and MLP is constructed via three linear layers and leaky ReLU function is applied after the first two layers. As a result, *θ* becomes more sensitive in the learning process, making it easier to obtain optimal parameters.

Further, in some embodiments, the processor 101 is configured to calculate a matching cost matrix constructed from a classification loss 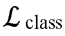 and tri-plane BBox loss ${L}_{box}^{tri}$ which is sum of BBox losses from three types of planes (horizontal, vertical and image planes): ${L}_{box}^{tri} = {\sum }_{p ϵ \left\{hor, ver, image\right\}} {L}_{box} \left({b}_{p}, {\hat{b}}_{p}\right)$ (23) ${L}_{box} \left({b}_{p}, {\hat{b}}_{p}\right) = {λ}_{GIoU} {L}_{GIoU} \left({b}_{p}, {\hat{b}}_{p}\right) + {λ}_{{L}_{1}} {L}_{{L}_{1}} \left({b}_{p}, {\hat{b}}_{p}\right) ,$ (24) where *bₚ* is ground truth, *b̂ₚ* is prediction and each *λ* is a weight coefficient. 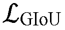 and 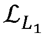 denote generalized intersection over union (GIoU) loss and *ℓ*₁ loss, respectively. To optimize *θ* = {*µ, τ*}, gradient ∇ 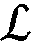 (*θ*) is computed. The mask *m* is differentiable for *µ* and *τ*, respectively, and its derivatives are: $\frac{dm}{dμ} = \frac{τ exp \left(-τ\left(x-μ\right)\right)}{{\left(1+exp\left(-τ\left(x-μ\right)\right)\right)}^{2}}$ (25) $\frac{dm}{dτ} = - \frac{\left(x-μ\right) exp \left(-τ\left(x-μ\right)\right)}{{\left(1+exp\left(-τ\left(x-μ\right)\right)\right)}^{2}}$ (26)

The gradient ∇ 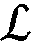 (*θ*) can be backpropagated to Eq. (25) and Eq. (26) by auto-differentiation, and thus the optimal *θ** can be determined by learning.

### Tri-plane set-prediction loss

In some embodiments, the processor 101 is configured to calculate a matching cost matrix with each element constructed from 1) a classification cost 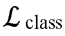 and 2) a BBox loss between one of N predictions b and one of ground truth BBoxes b (including "no object" class). A BBox loss is a weighted combination of generalized intersection over union (GIoU) loss 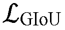 and ℓ₁loss 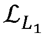 ${L}_{box} \left(b, \hat{b}\right) = {λ}_{GIoU} {L}_{GIoU} \left(b, \hat{b}\right) + {λ}_{{L}_{1}} {L}_{{L}_{1}} \left(b, \hat{b}\right) ,$ (27) where *λ*_{*} denotes a weight. Over a permutation set 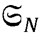 between N predictions and ground truth objects, Hungarian algorithm is applied with the matching cost matrix to find an optimal assignment *σ*∈* 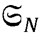 of predictions to ground truth. Given σ*, a loss is computed only for matched pairs and is referred to as a set-prediction loss.

Some embodiments are based on the realization that since the processor 101 predicts the 3D BBoxes *g̅* in the radar coordinate and maps them into the 2D image plane, the above Hungarian match cost matrix can be enhanced using a tri-plane BBox loss from both the 3D radar coordinate and the 2D image plane.

FIG. 5 illustrates the tri-plane BBox loss, according to some embodiments of the present disclosure. A 3D BBox *g̅* 501 in the radar coordinate is projected onto (1) a 2D horizontal radar plane 503 as *b̂ₕₒᵣ* = *projₕₒᵣ*(*g̅*); (2) a 2D vertical radar plane 505 as *b̂ᵥₑᵣ = projᵥₑᵣ(g̅*); and 3) a 2D image plane 507 as *b̂_{image}.* The tri-plane BBox loss ${L}_{box}^{tri}$ is a sum of a 2D BBox over loss 509 over the 2D horizontal radar plane 503, a 2D BBox over loss 511 over the 2D vertical radar plane 505, and a 2D BBox over loss 513 over the 2D image plane 507. In particular, the tri-plane BBox loss ${L}_{box}^{tri}$ sums up 2D BBox losses over all three planes 509-513 using equation (16) ${L}_{box}^{tri} = {L}_{box} \left({b}_{hor}, {\hat{b}}_{hor}\right) + {L}_{box} \left({b}_{ver}, {\hat{b}}_{ver}\right) + {L}_{box} \left({b}_{image}, {\hat{b}}_{image}\right)$ (28)

In an embodiment, the processor 101 finds an optimal assignment ${σ}_{tri}^{∗}$ using the matching cost matrix with 1) the classification cost 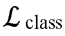 and 2) the tri-plane BBox loss ${L}_{box}^{tri}$*.* The resulting set-prediction loss using ${σ}_{tri}^{∗}$ is referred to as the tri-plane set-prediction loss.

### Learnable radar-camera transformation

The rotation matrix R and the translation vector t in the radar-camera transformation of equation (7) can be calibrated in advance. However, this calibration process may be accurate only for a limited interval of depth and angles. Some embodiments are based on the realization that instead of relying on such a calibrated transformation, a learnable transformation can be formulated via a reparameterization on R while keeping it orthonormal. To this end, it needs to be ensured that learnable *R̂* resides in a 3D special orthogonal group SO(3). Considering that 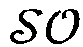 (3) is a special case of a Lie group, one of the differentiable manifolds, firstly a 3D vector *ω* = [*ωₓ, ω_{y}, ω_{z}*]*^{T}* is mapped to Lie algebra 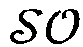 (3) using a projection 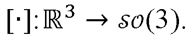 Further, an exponential map exp: 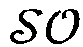 (3) → 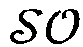 (3) is applied, which maps [*ω*] into the nearest point in 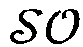 (3) such that the resulting exp([*ω*]) resides on 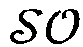 (3) and satisfies the orthonormal structure. This leads to the following reparameterization of *R̂* in terms of *ω*: $\hat{R} \approx exp \left(\left[ω\right]\right) = I + \frac{sin ∅}{∅} \left[ω\right] + \frac{1 - cos ∅}{∅} {\left[ω\right]}^{2} , s . t . \left[ω\right] = \left[\begin{matrix}0 & - {ω}_{z} & {ω}_{y} \\ {ω}_{z} & 0 & - {ω}_{x} \\ - {ω}_{y} & {ω}_{x} & 0\end{matrix}\right]$ (29) where Ø = || *ω* || is ℓ₂norm. With the above reparameterization (29), the learnable radar-camera transformation in equation (7) reduces to learn the 3D vector *ω* and the translation vector t.

FIG. 6A shows a block of the encoder 103aa of the transformer neural network 103a, according to some embodiments. The sequence of input features 309 is input to the encoder 103aa. The encoder 103aa includes a self-attention layer 601 and an add & norm layer 603. The self-attention layer 601 is based on a multi-head attention mechanism that allow for consideration of correlations between the horizontal view image 201 and the vertical view image 203. The multi-head attention mechanism is concatenation of M single attention heads followed by a projection layer L to regain initial dimensionality. The multi-head attention mechanism uses residual connections, dropout, and layer normalization: $\begin{matrix}mhAtt = layernorm \left(Que\left(H\right)+dropout\left(L{H}^{˜}\right)\right) \\ {H}^{˜} = \\ Att \left(Que\left(H\right),Key\left(H,Val\left(H\right),{W}_{1}\right)\right) ⊕ … ⊕ Att \left(Que\left(H\right),Key\left(H,Val\left(H\right),{W}_{M}\right)\right)\end{matrix}$ (30) $\begin{matrix}{H}^{˜} = \\ Att \left(Que\left(H\right),Key\left(H,Val\left(H\right),{W}_{1}\right)\right) ⊕ … ⊕ Att \left(Que\left(H\right),Key\left(H,Val\left(H\right),{W}_{M}\right)\right)\end{matrix}$ (31)

The output of the self-attention layer 601 is passed through the add & norm layer 603. The add & norm layer 603 is configured to create a skip connection to train the model more efficiently and provide regularization for weights.

The output of the encoder 103aa, i.e., the encoded features 311 are input to the decoder 103bb.

FIG. 6B shows a block of the decoder 103bb of the transformer neural network 103a, according to some embodiments. The decoder 103bb includes a self-attention layer 605, an add & norm layer 607, a cross-attention layer 609, and an add & norm layer 611. The decoder 103bb receives the object queries 313 which are initially set to zero and the encoded features 311, and generates decoder embeddings through the self-attention layer 605 and the cross-attention layer 609. In particular, the cross-attention layer 609 utilizes the encoded features 311 to produce keys and values, which correlate with the object queries 313 to produce the updated object queries 315.

The object queries 313 are first input into the self-attention layer 605 and output is then passed through the add & norm layer 607. At this point, the values are added using a residual structure. Next, cross-attention between the encoded features 311, used as the key, and the object queries 313 is calculated by the cross-attention layer 609. Further, an output of the cross-attention layer 609 is input to the add & norm layer 611. The add & norm layer 611 is configured to create the skip connection to train the model more efficiently and provide regularization for weights. This entire sequence is repeated L_{cross} times to obtain the updated object queries 315.

Some embodiments are based on the realization that the updated object queries 315 can be used for segmentation of the object in the scene. The segmentation of the object can be achieved by adding a segmentation head on top of the decoder outputs, as shown in FIG. 7.

FIG. 7A shows the transformer neural network 103a extended by adding a segmentation head 701, according to some embodiments of the present disclosure. The segmentation head 701 is configured to generate a segmentation mask corresponding to the object present in the scene, based on the updated object queries 315, as explained below in FIG. 7B.

FIG. 7B shows an architecture 703 of the segmentation head 701, according to some embodiments of the present disclosure. The architecture 703 of the segmentation head 701 includes a cross-attention layer 705, a feature pyramid network (FPN)-style CNN 707, a light U-Net 709, and a feed forward network (FNN) layer 711. Given an updated object query of the updated object queries 315, the cross-attention layer 705 is used to generate attention heatmaps for each object at a low resolution. Features 713 of the vertical view image 203 generated by processing the vertical view image 203 with the shared backbone neural network 301 are used in the cross-attention to enhance robustness to height of the object present in the scene. Further, in some embodiments, to increase resolution of the segmentation mask, an FPN-style architecture is employed which also exploits the features 713 of the vertical view image at different layers (from 5 to 2) to generate coarse segmentation masks.

Since the FPN 707 is also responsible for lifting features from the radar coordinate to the image plane, it does not have enough capacity to generate fine-grained segmentation masks. Thereby, the light U-Net 709 is used to further refine the generated segmentation masks. 117 represents the output image of the scene with a generated segmentation mask 719 corresponding to the object 121 present in the scene.

The FFN layer 711 is configured to regress bounding box parameters such as a center of the bounding box as well as width, height. Further, in some embodiments, for each updated object query, the corresponding bounding box prediction 715 in the radar coordinate is exploited and transformation & projection 717 (explained in FIG. 4) is applied, to obtain a bounding box in the image plane. The bounding box in the image plane is used to extract the corresponding portion from a ground truth segmentation mask, which is employed to supervise segmentation prediction for the same query.

FIG. 8 is a schematic illustrating by non-limiting example a computing apparatus for implementing the methods and the systems of the present disclosure. The computing device 800 can include a power source 801, a processor 803, a memory 805, a storage device 807, all connected to a bus 809. Further, a high-speed interface 811, a low-speed interface 813, high-speed expansion ports 815 and low speed connection ports 817, can be connected to the bus 809. In addition, a low-speed expansion port 819 is in connection with the bus 809. Further, an input interface 821 can be connected via the bus 809 to an external receiver 823 and an output interface 825. A receiver 827 can be connected to an external transmitter 829 and a transmitter 831 via the bus 809. Also connected to the bus 809 can be an external memory 833, external sensors 835, machine(s) 837, and an environment 839. Further, one or more external input/output devices 841 can be connected to the bus 809. A network interface controller (NIC) 843 can be adapted to connect through the bus 809 to a network 845, wherein data or other data, among other things, can be rendered on a third-party display device, third party imaging device, and/or third-party printing device outside of the computer device 800.

The memory 805 can store instructions that are executable by the computer device 800, historical data, and any data that can be utilized by the methods and systems of the present disclosure. The memory 805 can include random access memory (RAM), read only memory (ROM), flash memory, or any other suitable memory systems. The memory 805 can be a volatile memory unit or units, and/or a non-volatile memory unit or units. The memory 805 may also be another form of computer-readable medium, such as a magnetic or optical disk.

The storage device 807 can be adapted to store supplementary data and/or software modules used by the computer device 800. For example, the storage device 807 can store historical data and other related data as mentioned above regarding the present disclosure. Additionally, or alternatively, the storage device 807 can store historical data like data as mentioned above regarding the present disclosure. The storage device 807 can include a hard drive, an optical drive, a thumb-drive, an array of drives, or any combinations thereof. Further, the storage device 807 can contain a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, the processor 803), perform one or more methods, such as those described above.

The computing device 800 can be linked through the bus 809, optionally, to a display interface or user Interface (HMI) 847 adapted to connect the computing device 800 to a display device 849 and a keyboard 851, wherein the display device 849 can include a computer monitor, camera, television, projector, or mobile device, among others. In some implementations, the computer device 800 may include a printer interface to connect to a printing device, wherein the printing device can include a liquid inkjet printer, solid ink printer, large-scale commercial printer, thermal printer, UV printer, or dye-sublimation printer, among others.

The high-speed interface 811 manages bandwidth-intensive operations for the computing device 800, while the low-speed interface 813 manages lower bandwidth-intensive operations. Such allocation of functions is an example only. In some implementations, the high-speed interface 811 can be coupled to the memory 805, the user interface (HMI) 847, and to the keyboard 851 and the display 849 (e.g., through a graphics processor or accelerator), and to the high-speed expansion ports 815, which may accept various expansion cards via the bus 809. In an implementation, the low-speed interface 813 is coupled to the storage device 807 and the low-speed expansion ports 819, via the bus 809. The low-speed expansion ports 819, which may include various communication ports (e.g., USB, Bluetooth, Ethernet, wireless Ethernet) may be coupled to the one or more input/output devices 841. The computing device 800 may be connected to a server 853 and a rack server 855. The computing device 800 may be implemented in several different forms. For example, the computing device 800 may be implemented as part of the rack server 855.

The description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments.

Further, embodiments of the present disclosure and the functional operations described in this specification can be implemented in digital electronic circuitry, in tangibly-embodied computer software or firmware, in computer hardware, including the structures disclosed in this specification and their structural equivalents, or in combinations of one or more of them. Further some embodiments of the present disclosure can be implemented as one or more computer programs, i.e., one or more modules of computer program instructions encoded on a tangible non transitory program carrier for execution by, or to control the operation of, data processing apparatus. Further still, program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

According to embodiments of the present disclosure the term "data processing apparatus" can encompass all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

A computer program can be deployed to be executed on one computer or on multiple computers that are located at one site or distributed across multiple sites and interconnected by a communication network. Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data.

Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A system comprising: a processor; and a memory having instructions stored thereon that, when executed by the processor, cause the system to:
collect features of a first radar image of the scene captured from a first sensor and a second radar image of the scene captured from a second sensor, each of the first radar image and the second radar image includes depth data;
process selected features of the collected features with a transformer neural network having a transformer architecture with self-attention over the selected features and cross-attention between object queries and the selected features to produce 2D+ embeddings of the object, wherein the 2D+ embeddings of the object correspond to updated object queries comprising the object queries with 3D spatial embeddings;
process the 2D+ embeddings with a detection neural network to perceive the object and produce an image of the scene with markings of the perceived object; and
output the image of the scene with the markings of the perceived object.

2. The system of claim 1, wherein the markings of the perceived object include a two dimensional bounding box around the object, and wherein the two dimensional bounding box specifies at least one of a location of the object, a dimension of the object, and a velocity of the object.

3. The system of claim 1, wherein
(a) the first sensor and the second sensor are arranged such that a plane of view of the first sensor defining an orientation of the first radar image is different from a plane of view of the second sensor defining an orientation of the second radar image or
(b) the first and the second sensors are of different modalities such that a multi-view image of the scene is multimodal.

4. The system of claim 1, wherein the first sensor and the second sensor are arranged such that a plane of view of the first sensor defining an orientation of the first radar image is perpendicular to a plane of view of the second sensor defining an orientation of the second radar image.

5. The system of claim 4, wherein the first sensor is a radar arranged to produce a horizontal view image of the scene including at least one of Radio Frequency (RF) reflectivity, phase, depth, and velocity information, and wherein the second sensor is a radar arranged to produce a vertical view image of the scene including at least one of RF reflectivity, phase, depth, and velocity information.

6. The system of claim 1, wherein the selected features correspond to relevant features of the first radar image and the second radar image selected by applying top-K selection on the features of the first radar image and the second radar image.

7. The system of claim 5, wherein the processor is further configured to:
generate features of the horizontal view image and the vertical view image by processing the horizontal view image and the vertical view image with a shared backbone neural network; and
select relevant features from the features of the horizontal view image and the vertical view image as the selected features by applying top-K selection on the features of the horizontal view image and the vertical view image.

8. The system of claim 7, wherein the processor is further configured to:
compute positional embedding by tuning a dimension ratio that changes dimensions between depth positional embedding and angular positional embedding while keeping a total dimension of the positional embedding constant; and
concatenate the positional embedding with the selected features to produce a sequence of input features.

9. The system of claim 8, wherein
(a) the dimension ratio is automatically tuned by multiplying the depth positional embedding and the angular positional embedding with a differential mask and a complimentary mask of the differential mask, respectively; or
(b) the transformer neural network includes:
an encoder configured to produce a set of encoded features from the sequence of input features; and
a decoder configured to determine the 2D+ embeddings based across attention between randomly initialized object queries of the decoder and the set of encoded features.

10. The system of claim 1, wherein the processor is further configured to:
estimate a three dimensional bounding box around the object in radar coordinate based on the 2D+ embeddings;
convert the estimated three dimensional box in the radar coordinate to a three dimensional bounding box in camera coordinate, based on a radar-camera transformation; and
project the three dimensional bounding box in the camera coordinate onto a two dimensional (2D) image plane to determine a two dimensional bounding box around the object.

11. The system of claim 10, wherein the radar-camera transformation is a learnable transformation via reparameterization on a rotation matrix of the radar-camera transformation while preserving an orthonormal structure of the rotation matrix.

12. The system of claim 10, wherein the processor is further configured to project the three dimensional bounding box in the radar coordinate onto a 2D horizontal radar plane, a 2D vertical radar plane, and the 2D image plane, wherein the processor is optionally further configured to determine a tri-plane bounding box loss based on a sum of 2D bounding box losses over the 2D horizontal radar plane, the 2D vertical radar plane, and the 2D image plane.

13. The system of claim 1, wherein the markings of the perceived object include a segmentation of the object.

14. A method for localizing an object in a scene, comprising the following steps carried out by a processor:
collecting features of a first radar image of the scene captured from a first sensor and a second radar image of the scene captured from a second sensor, each of the first radar image and the second radar image includes depth data;
processing selected features of the collected features with a transformer neural network having a transformer architecture with self-attention over the selected features and cross-attention between object queries and the selected features to produce 2D+ embeddings of the object, wherein the 2D+ embeddings of the object correspond to updated object queries comprising the object queries with 3D spatial embeddings;
processing the 2D+ embeddings with a detection neural network to perceive the object and produce an image of the scene with markings of the perceived object; and
outputting the image of the scene with the markings of the perceived object.

15. A non-transitory computer-readable storage medium embodied thereon a program executable by a processor for performing a method for for localizing an object in a scene, the method comprising:
collecting features of a first radar image of the scene captured from a first sensor and a second radar image of the scene captured from a second sensor, each of the first radar image and the second radar image includes depth data;
processing selected features of the collected features with a transformer neural network having a transformer architecture with self-attention over the selected features and cross-attention between object queries and the selected features to produce 2D+ embeddings of the object, wherein the 2D+ embeddings of the object correspond to updated object queries comprising the object queries with 3D spatial embeddings;
processing the 2D+ embeddings with a detection neural network to perceive the object and produce an image of the scene with markings of the perceived object; and
outputting the image of the scene with the markings of the perceived object.

## Patentansprüche

1. System, umfassend: einen Prozessor; und einen Speicher, in dem Anweisungen gespeichert sind, die, bei Ausführung durch den Prozessor, das System veranlassen zum:
Sammeln von Merkmalen eines ersten Radarbildes der Szene, das von einem ersten Sensor aufgenommen wird, und eines zweiten Radarbildes der Szene, das von einem zweiten Sensor aufgenommen wird, wobei sowohl das erste Radarbild als auch das zweite Radarbild Tiefendaten aufweisen;
Verarbeiten von ausgewählten Merkmalen der gesammelten Merkmale mit einem Transformer-basierten neuronalen Netzwerk, das eine Transformer-Architektur mit Self-Attention über die ausgewählten Merkmale und Cross-Attention zwischen Objektabfragen und den ausgewählten Merkmalen aufweist, um 2D+-Einbettungen des Objekts zu erstellen, wobei die 2D+-Einbettungen des Objekts aktualisierten Objektabfragen entsprechen, die Objektabfragen mit 3D-Raumeinbettungen umfassen;
Verarbeiten der 2D+-Einbettungen mit einem neuronalen Erfassungsnetzwerk, um das Objekt zu erkennen und ein Bild der Szene mit Markierungen des erkannten Objekts zu erstellen; und
Ausgeben des Bildes der Szene mit den Markierungen des erkannten Objekts.

2. System nach Anspruch 1, wobei die Markierungen des erkannten Objekts einen zweidimensionalen Begrenzungsrahmen um das Objekt herum umfassen, und wobei der zweidimensionale Begrenzungsrahmen mindestens eines spezifiziert von einem Standort des Objekts, einer Abmessung des Objekts oder einer Geschwindigkeit des Objekts.

3. System nach Anspruch 1, wobei
(a) der erste Sensor und der zweite Sensor so angeordnet sind, dass sich eine Sichtebene des ersten Sensors, die eine Ausrichtung des ersten Radarbildes definiert, von einer Sichtebene des zweiten Sensors, die eine Ausrichtung des zweiten Radarbildes definiert, unterscheidet
oder
(b) der erste und der zweite Sensor unterschiedliche Modalitäten aufweisen, sodass ein Mehransichtsbild der Szene multimodal ist.

4. System nach Anspruch 1, wobei der erste Sensor und der zweite Sensor so angeordnet sind, dass eine Sichtebene des ersten Sensors, die eine Ausrichtung des ersten Radarbildes definiert, zu einer Sichtebene des zweiten Sensors, die eine Ausrichtung des zweiten Radarbildes definiert, senkrecht ist.

5. System nach Anspruch 4, wobei der erste Sensor ein Radar ist, das angeordnet ist, um ein Bild einer horizontalen Ansicht der Szene zu erstellen, das mindestens eines aufweist von Informationen zu Hochfrequenz (RF)-Reflektivität, Phase, Tiefe und Geschwindigkeit, und wobei der zweite Sensor ein Radar ist, das angeordnet ist, um ein Bild einer vertikalen Ansicht der Szene zu erstellen, das mindestens eines aufweist von Informationen zu RF-Reflektivität, Phase, Tiefe und Geschwindigkeit.

6. System nach Anspruch 1, wobei die ausgewählten Merkmale den relevanten Merkmalen des ersten Radarbildes und des zweiten Radarbildes entsprechen, die durch Anwendung einer Top-K-Auswahl auf die Merkmale des ersten Radarbildes und des zweiten Radarbildes ausgewählt werden.

7. System nach Anspruch 5, wobei der Prozessor weiter eingerichtet ist zum:
Erzeugen von Merkmalen des Bildes der horizontalen Ansicht und des Bildes der vertikalen Ansicht, indem das Bild der horizontalen Ansicht und das Bild der vertikalen Ansicht mit einem gemeinsamen Backbone-basierten neuronalen Netzwerk verarbeitet werden; und
Auswählen von relevanten Merkmalen aus den Merkmalen des Bildes der horizontalen Ansicht und des Bildes der vertikalen Ansicht als die ausgewählten Merkmale, indem eine Top-K-Auswahl auf die Merkmale des Bildes der horizontalen Ansicht und des Bildes der vertikalen Ansicht angewendet wird.

8. System nach Anspruch 7, wobei der Prozessor weiter eingerichtet ist zum:
Berechnen einer Positionseinbettung durch Abstimmung eines Abmessungsverhältnisses, das die Abmessungen zwischen einer Tiefenpositionseinbettung und einer Winkelpositionseinbettung verändert, während die Gesamtabmessung der Positionseinbettung konstant gehalten wird; und
Verketten der Positionseinbettungen mit den ausgewählten Merkmalen, um eine Sequenz von Eingabemerkmalen zu erstellen.

9. System nach Anspruch 8, wobei
(a) das Abmessungsverhältnis automatisch abgestimmt wird, indem jeweils die Tiefenpositionseinbettung und die Winkelpositionseinbettung mit einer differenziellen Maske und einer komplementären Maske der differenziellen Maske multipliziert wird;
oder
(b) das Transformer-basierte neuronale Netzwerk umfasst:
einen Codierer, der eingerichtet ist, aus der Sequenz von Eingabemerkmalen einen Satz kodierter Merkmale zu erstellen; und
einen Decodierer, der eingerichtet ist, die 2D+-Einbettungen-basierte Aufmerksamkeit zwischen zufällig initialisierten Objektabfragen des Decoders und der Menge der kodierten Merkmale zu bestimmen.

10. System nach Anspruch 1, wobei der Prozessor weiter eingerichtet ist zum:
Schätzen eines dreidimensionalen Begrenzungsrahmens um das Objekt in Radarkoordinaten auf der Grundlage der 2D+-Einbettungen;
Umwandeln des geschätzten dreidimensionalen Begrenzungsrahmens in der Radarkoordinate in einen dreidimensionalen Begrenzungsrahmen in einer Kamerakoordinate, auf Grundlage einer Radar-Kamera-Transformation; und
Projizieren des dreidimensionalen Begrenzungsrahmens in der Kamerakoordinate auf eine zweidimensionale (2D) Bildebene, um einen zweidimensionalen Begrenzungsrahmen um das Objekt herum zu bestimmen.

11. System nach Anspruch 10, wobei die Radar-Kamera-Transformation eine lernbare Transformation über Reparametrisierung einer Rotationsmatrix der Radar-Kamera-Transformation ist, während eine orthonormale Struktur der Rotationsmatrix beibehalten wird.

12. System nach Anspruch 10, wobei der Prozessor ferner eingerichtet ist, den dreidimensionalen Begrenzungsrahmen in der Radarkoordinate auf eine horizontale 2D-Radarebene, eine vertikale 2D-Radarebene und die 2D-Bildebene zu projizieren, wobei der Prozessor optional ferner eingerichtet ist, einen Drei-Ebenen-Begrenzungsrahmen-Verlust auf der Grundlage einer Summe aus 2D-Begrenzungsrahmen-Verlusten über die horizontale 2D-Radarebene, die vertikale 2D-Radarebene und die 2D-Bildebene zu bestimmen.

13. System nach Anspruch 1, wobei die Markierungen des erkannten Objekts eine Segmentierung des Objekts umfassen.

14. Verfahren zur Lokalisierung eines Objekts in einer Szene, umfassend die folgenden, von einem Prozessor ausgeführten Schritte:
Sammeln von Merkmalen eines ersten Radarbildes der Szene, das von einem ersten Sensor aufgenommen wird, und eines zweiten Radarbildes der Szene, das von einem zweiten Sensor aufgenommen wird, wobei sowohl das erste Radarbild als auch das zweite Radarbild Tiefendaten aufweist;
Verarbeiten von ausgewählten Merkmalen der gesammelten Merkmale mit einem Transformer-basierten neuronalen Netzwerk, das eine Transformer-Architektur mit Self-Attention über die ausgewählten Merkmale und Cross-Attention zwischen Objektabfragen und den ausgewählten Merkmalen aufweist, um 2D+-Einbettungen des Objekts zu erstellen, wobei die 2D+-Einbettungen des Objekts aktualisierten Objektabfragen entsprechen, die Objektabfragen mit 3D-Raumeinbettungen umfassen;
Verarbeiten der 2D+-Einbettungen mit einem neuronalen Erfassungsnetzwerk, um das Objekt zu erkennen und ein Bild der Szene mit Markierungen des erkannten Objekts zu erstellen; und
Ausgeben des Bildes der Szene mit den Markierungen des erkannten Objekts.

15. Nicht-transitorisches, computerlesbares Speichermedium, auf dem ein von einem Prozessor ausführbares Programm zur Durchführung eines Verfahrens zur Lokalisierung eines Objekts in einer Szene verkörpert ist, wobei das Verfahren umfasst:
Sammeln von Merkmalen eines ersten Radarbildes der Szene, das von einem ersten Sensor aufgenommen wird, und eines zweiten Radarbildes der Szene, das von einem zweiten Sensor aufgenommen wird, wobei sowohl das erste Radarbild als auch das zweite Radarbild Tiefendaten aufweist;
Verarbeiten von ausgewählten Merkmalen der gesammelten Merkmale mit einem Transformer-basierten neuronalen Netzwerk, das eine Transformer-Architektur mit Self-Attention über die ausgewählten Merkmale und Cross-Attention zwischen Objektabfragen und den ausgewählten Merkmalen aufweist, um 2D+-Einbettungen des Objekts zu erstellen, wobei die 2D+-Einbettungen des Objekts aktualisierten Objektabfragen entsprechen, die Objektabfragen mit 3D-Raumeinbettungen umfassen;
Verarbeiten der 2D+-Einbettungen mit einem neuronalen Erfassungsnetzwerk, um das Objekt zu erkennen und ein Bild der Szene mit Markierungen des erkannten Objekts zu erstellen; und
Ausgeben des Bildes der Szene mit den Markierungen des erkannten Objekts.

## Revendications

1. Un système comprenant : un processeur ; et une mémoire ayant des instructions stockées sur celle-ci qui, lorsqu'elles sont exécutées par le processeur, amènent le système à :
collecter des caractéristiques d'une première image radar de la scène capturée à partir d'un premier capteur et d'une seconde image radar de la scène capturée à partir d'un second capteur, chacune de la première image radar et de la seconde image radar incluant des données de profondeur ;
traiter des caractéristiques sélectionnées parmi les caractéristiques collectées avec un réseau neuronal transformeur ayant une architecture de transformeur avec une auto-attention sur les caractéristiques sélectionnées et une attention croisée entre des requêtes d'objet et les caractéristiques sélectionnées afin de produire des plongements 2D+ de l'objet, dans lequel les plongements 2D+ de l'objet correspondent à des requêtes d'objet mises à jour comprenant les requêtes d'objet avec des plongements spatiaux 3D ;
traiter les plongements 2D+ avec un réseau neuronal de détection afin de percevoir l'objet et produire une image de la scène avec des marquages de l'objet perçu ; et
délivrer l'image de la scène avec les marquages de l'objet perçu.

2. Le système selon la revendication 1, dans lequel les marquages de l'objet perçu comprennent une boîte englobante à deux dimensions autour de l'objet, et dans lequel la boîte englobante à deux dimensions spécifie au moins l'un parmi un emplacement de l'objet, une dimension de l'objet, et une vitesse de l'objet.

3. Le système selon la revendication 1, dans lequel
(a) le premier capteur et le second capteur sont agencés de sorte qu'un plan de vue du premier capteur définissant une orientation de la première image radar est différent d'un plan de vue du second capteur définissant une orientation de la seconde image radar
ou
(b) les premier et second capteurs sont de modalités différentes de sorte qu'une image à vues multiples de la scène est multimodale.

4. Le système selon la revendication 1, dans lequel le premier capteur et le second capteur sont agencés de sorte qu'un plan de vue du premier capteur définissant une orientation de la première image radar est perpendiculaire à un plan de vue du second capteur définissant une orientation de la seconde image radar.

5. Le système selon la revendication 4, dans lequel le premier capteur est un radar agencé pour produire une image de vue horizontale de la scène incluant au moins l'une parmi une réflectivité de radiofréquence (RF), une phase, une profondeur, et des informations de vitesse, et dans lequel le second capteur est un radar agencé pour produire une image de vue verticale de la scène incluant au moins l'une parmi une réflectivité RF, une phase, une profondeur, et des informations de vitesse.

6. Le système selon la revendication 1, dans lequel les caractéristiques sélectionnées correspondent à des caractéristiques pertinentes de la première image radar et de la seconde image radar sélectionnées en appliquant une sélection top-K aux caractéristiques de la première image radar et de la seconde image radar.

7. Le système selon la revendication 5, dans lequel le processeur est en outre configuré pour :
générer des caractéristiques de l'image de vue horizontale et de l'image de vue verticale en traitant l'image de vue horizontale et l'image de vue verticale avec un réseau neuronal de base partagé ; et
sélectionner des caractéristiques pertinentes parmi les caractéristiques de l'image de vue horizontale et de l'image de vue verticale en tant que caractéristiques sélectionnées en appliquant une sélection top-K aux caractéristiques de l'image de vue horizontale et de l'image de vue verticale.

8. Le système selon la revendication 7, dans lequel le processeur est en outre configuré pour :
calculer un plongement positionnel en ajustant un rapport de dimensions qui modifie des dimensions entre un plongement positionnel de profondeur et un plongement positionnel angulaire tout en maintenant une dimension totale du plongement positionnel constante ; et
concaténer le plongement positionnel avec les caractéristiques sélectionnées afin de produire une séquence de caractéristiques d'entrée.

9. Le système selon la revendication 8, dans lequel
(a) le rapport de dimensions est automatiquement ajusté en multipliant le plongement positionnel de profondeur et le plongement positionnel angulaire par un masque différentiel et un masque complémentaire du masque différentiel, respectivement ;
ou
(b) le réseau neuronal transformeur comprend :
un encodeur configuré pour produire un ensemble de caractéristiques encodées à partir de la séquence de caractéristiques d'entrée ; et
un décodeur configuré pour déterminer les plongements 2D+ sur la base d'une attention entre des requêtes d'objet initialisées aléatoirement du décodeur et l'ensemble des caractéristiques encodées.

10. Le système selon la revendication 1, dans lequel le processeur est en outre configuré pour :
estimer une boîte englobante tridimensionnelle autour de l'objet dans des coordonnées radar sur la base des plongements 2D+ ;
convertir la boîte tridimensionnelle estimée dans les coordonnées radar en une boîte englobante tridimensionnelle dans des coordonnées de caméra, sur la base d'une transformation radar-caméra ; et
projeter la boîte englobante tridimensionnelle dans les coordonnées de caméra sur un plan d'image bidimensionnel (2D) afin de déterminer une boîte englobante bidimensionnelle autour de l'objet.

11. Le système selon la revendication 10, dans lequel la transformation radar-caméra est une transformation pouvant être apprise via une reparamétrisation sur une matrice de rotation de la transformation radar-caméra tout en préservant une structure orthonormée de la matrice de rotation.

12. Le système selon la revendication 10, dans lequel le processeur est en outre configuré pour projeter la boîte englobante tridimensionnelle dans les coordonnées radar sur un plan radar horizontal 2D, un plan radar vertical 2D et le plan d'image 2D, dans lequel le processeur est en outre, facultativement configuré pour déterminer une perte de boîte englobante tri-planaire sur la base d'une somme de pertes de boîtes englobantes 2D sur les plans radar horizontal 2D, radar vertical 2D et d'image 2D.

13. Le système selon la revendication 1, dans lequel les marquages de l'objet perçu comprennent une segmentation de l'objet.

14. Un procédé de localisation d'un objet dans une scène, comprenant les étapes suivantes réalisées par un processeur :
collecte de caractéristiques d'une première image radar de la scène capturée à partir d'un premier capteur et d'une seconde image radar de la scène capturée à partir d'un second capteur, chacune de la première image radar et de la seconde image radar comprenant des données de profondeur ;
traitement de caractéristiques sélectionnées parmi les caractéristiques collectées avec un réseau neuronal transformeur ayant une architecture de transformeur avec une auto-attention sur les caractéristiques sélectionnées et une attention croisée entre des requêtes d'objet et les caractéristiques sélectionnées afin de produire des plongements 2D+ de l'objet, dans lequel les plongements 2D+ de l'objet correspondent à des requêtes d'objet mises à jour comprenant les requêtes d'objet avec des plongements spatiaux 3D ;
traitement des plongements 2D+ avec un réseau neuronal de détection afin de percevoir l'objet et de produire une image de la scène avec des marquages de l'objet perçu ; et
fournir l'image de la scène avec les marquages de l'objet perçu.

15. Un support de stockage non transitoire lisible par ordinateur incorporant un programme exécutable par un processeur pour exécuter un procédé pour localiser un objet dans une scène, le procédé comprenant :
collecte de caractéristiques d'une première image radar de la scène capturée à partir d'un premier capteur et d'une seconde image radar de la scène capturée à partir d'un second capteur, chacune de la première image radar et de la seconde image radar comprenant des données de profondeur ;
traitement de caractéristiques sélectionnées parmi les caractéristiques collectées avec un réseau neuronal transformeur ayant une architecture de transformeur avec une auto-attention sur les caractéristiques sélectionnées et une attention croisée entre des requêtes d'objet et les caractéristiques sélectionnées afin de produire des plongements 2D+ de l'objet, dans lequel les plongements 2D+ de l'objet correspondent à des requêtes d'objet mises à jour comprenant les requêtes d'objet avec des plongements spatiaux 3D ;
traitement des plongements 2D+ avec un réseau neuronal de détection afin de percevoir l'objet et de produire une image de la scène avec des marquages de l'objet perçu ; et
fournir l'image de la scène avec les marquages de l'objet perçu.
